# EUROPEAN PATENT APPLICATION

(11) **EP 3 872 265 A1**
(43) Date of publication of application: **01.09.2021**
(21) Application number: 19877314.5
(22) Date of filing: 23.10.2019
(51) Int. Cl.: E02B 3/06, E02B 3/14

(54) **BLOCK, METHOD FOR PRODUCING BLOCK, STRUCTURE USING BLOCK, AND METHOD FOR CONSTRUCTING STRUCTURE USING BLOCK**

(30) Priority: 23.10.2018 JP 2018199380; 26.10.2018 WO PCT/JP2018/039900; 08.01.2019 JP 2019001402; 08.01.2019 JP 2019001405; 08.01.2019 JP 2019001407; 08.01.2019 JP 2019001408
(71) Applicant: Yamagen Co., Ltd., Osaka-shi, Osaka 543-0001 (JP)
(72) Inventor: TANIYAMA, Yuka, Osaka-shi, Osaka 543-0001 (JP)
(74) Representative: Zacco GmbH
(86) International application number: PCT/JP2019/041535
(87) International publication number: WO 2020/085386

(57) **Abstract**

For example, with reduced manufacturing cost, there is provided a block used to construct a natural disaster prevention structure. In the block, a solid matter 1 in which a material including a waste is solidified in a predetermined shape is coated with a cement material 101, and one or a plurality of the coated solid matters 1 are sealed in a cement material.

## Description

### TECHNICAL FIELD

The present invention relates to, for example, a block usable to construct a natural disaster prevention structure, particularly, a block using a waste, a method of manufacturing the block, a structure using such blocks, and a method of constructing the structure using such blocks.

### BACKGROUND ART

Traditionally, in Japan, floods caused by overflowing of rivers or the like occur due to typhoon strikes and occurrence of heavy rain. In the Great East Japan Earthquake in 2011, catastrophic damage was caused by tsunami. In near future, it is expected that the Nankai Trough Earthquake will occur to cause tsunami to affect the pacific coast of Japan. Therefore, in order to protect lives and environment from disasters such as flood and tsunami, it is an urgent issue to construct a breakwater, an embankment, a sand arrestation, a dam, a shelter, or the like as a natural disaster prevention structure.

Conventionally, a method using a concrete block has been proposed as a method of constructing a structure such as a breakwater. For example, PTL 1 discloses a technique of constructing an embankment by arranging a plurality of concrete blocks. PTL 2 proposes a technique of pressing a plurality of concrete blocks using a PC steel member into a one-piece rigid body to be used for an embankment or the like.

### CITATION LIST

### PATENT LITERATURE

PTL 1: Japanese Patent Laying-Open No. 10-060858
PTL 2: Japanese Patent Laying-Open No. 2004-169512

### SUMMARY OF INVENTION

### TECHNICAL PROBLEM

Each of the blocks disclosed in PTL 1 and PTL 2 is, however, entirely composed of concrete, thus resulting in high manufacturing cost. Therefore, when constructing a natural disaster prevention structure using each of the blocks of PTL 1 and PTL 2, a great expense is required. Such a great expense required retards deployment of operations for disaster countermeasures, thus failing to protect lives and environment. This presents a serious problem that needs to be overcome.

The present invention has been made to solve the above problem and has an object to provide, for example, a block used to construct a natural disaster prevention structure with reduced manufacturing cost, a method of manufacturing the block, a structure using such blocks, and a method of constructing the structure using such blocks.

### SOLUTION TO PROBLEM

The present invention relates to a method of manufacturing a block using a waste and usable to construct a natural disaster prevention structure, for example.

A method of manufacturing a block according to the present invention includes: forming a solid matter in which a material including a waste is solidified in a predetermined shape; covering a surface of the solid matter with a film composed of a cement material by attaching the cement material on the surface of the solid matter and hardening the cement material attached on the solid matter so as to coat the solid matter with the cement material; and forming a block in which one or a plurality of the solid matters each coated with the cement material are sealed in a cement material, by accommodating, in a formwork, the one or plurality of the solid matters each coated with the cement material, pouring the cement material into the formwork, and hardening the cement material.

In the method of manufacturing the block, in the covering, the solid matter is preferably coated with the cement material by immersing, for a predetermined time, the solid matter in the cement material stored in a bath, removing the solid matter from the bath, and hardening the cement material attached on the solid matter.

In the method of manufacturing the block, in the covering, the solid matter is preferably coated with the cement material by hardening the cement material sprayed on the solid matter.

In the method of manufacturing the block, in the covering, the solid matter coated with the cement material is preferably tied by a belt.

In the method of manufacturing the block, in the forming of the solid matter, by introducing the waste into a shaping container and compressing the waste by applying pressure using pressure application means, the solid matter is preferably formed with the waste being compressed in the predetermined shape.

In the method of manufacturing the block, in the forming of the solid matter, by mixing the waste and the cement material in a shaping container and hardening the cement material, the solid matter is preferably formed with a mixture including the waste and the cement material homogeneously being solidified in the predetermined shape.

In the method of manufacturing the block, in the forming of the block, the block is preferably formed with a plurality of iron bars being disposed in the block, by pouring the cement material with the plurality of iron bars being disposed in the formwork.

A method of manufacturing a block according to the present invention includes: forming a solid matter in which a material including a waste is solidified in a predetermined shape; and forming a block in which one or a plurality of the solid matters are sealed in a cement material, by accommodating, in a formwork, the one or plurality of the solid matters, pouring the cement material into the formwork, and hardening the cement material, wherein in the forming of the block, the block is provided with a plurality of sets of protrusions and recesses at an outer surface of the block by pouring the cement material into the formwork, the formwork having a plurality of sets of first protuberances and second protuberances, each of the recesses having a shape engageable with a corresponding protrusion, the recesses being located opposite to the respective protrusions, the first protuberances protruding outward, the second protuberances protruding inward, the second protuberances being located opposite to the respective first protuberances, and the first protuberances and the second protuberances are provided to extend across respective entire heights of front, rear, left, and right side surfaces of the formwork to form the sets of protrusions and recesses only at front, rear, left, and right side surfaces of the block so as to extend across respective entire heights of the front, rear, left, and right side surfaces of the block.

The method of manufacturing the block preferably further includes covering a surface of the solid matter with a film composed of a cement material by hardening the cement material attached on the solid matter so as to coat the solid matter with the cement material, wherein in the forming of the block, the block is formed in which one or a plurality of the solid matters each coated with the cement material are sealed in a cement material, by accommodating, in a formwork, the one or plurality of the solid matters each coated with the cement material, pouring the cement material into the formwork, and hardening the cement material.

In the method of manufacturing the block, in the forming of the block, the block is preferably formed with a plurality of iron bars being disposed in the block, by pouring the cement material with the plurality of iron bars being disposed in the formwork.

In the method of manufacturing the block, in the forming of the solid matter, by introducing the waste into a shaping container and compressing the waste by applying pressure using pressure application means, the solid matter is preferably formed with the waste being compressed in the predetermined shape.

In the method of manufacturing the block, in the forming of the solid matter, by mixing the waste and the cement material in a shaping container and hardening the cement material, the solid matter is preferably formed with a mixture including the waste and the cement material homogeneously being solidified in the predetermined shape.

A method of manufacturing a block according to the present invention includes: forming a solid matter in which a material including a waste is solidified in a predetermined shape; and forming a block in which one or a plurality of the solid matters are sealed in a cement material, by accommodating, in a formwork, the one or plurality of the solid matters, pouring the cement material into the formwork, and hardening the cement material, wherein in the forming of the block, the block is provided with at least one protrusion and at least one recess at an outer surface of the block by pouring the cement material into the formwork, the formwork having a first protuberance and a second protuberance, the recess having a shape engageable with a corresponding protrusion, the first protuberance protruding outward, the second protuberance protruding inward, and the first protuberance and the second protuberance are provided only at two side surfaces of the formwork facing each other in a frontward/rearward direction or a leftward/rightward direction to provide the protrusion and the recess only at an upper end surface and a lower end surface of the outer surface of the block.

The method of manufacturing the block preferably further includes covering a surface of the solid matter with a film composed of a cement material by hardening the cement material attached on the solid matter so as to coat the solid matter with the cement material, wherein in the forming of the block, the block is formed in which one or a plurality of the solid matters each coated with the cement material are sealed in a cement material, by accommodating, in a formwork, the one or plurality of the solid matters each coated with the cement material, pouring the cement material into the formwork, and hardening the cement material.

In the method of manufacturing the block, in the forming of the block, the block is preferably formed with a plurality of iron bars being disposed in the block, by pouring the cement material with the plurality of iron bars being disposed in the formwork.

In the method of manufacturing the block, in the forming of the solid matter, by introducing the waste into a shaping container and compressing the waste by applying pressure using pressure application means, the solid matter is preferably formed with the waste being compressed in the predetermined shape.

In the method of manufacturing the block, in the forming of the solid matter, by mixing the waste and the cement material in a shaping container and hardening the cement material, the solid matter is preferably formed with a mixture including the waste and the cement material homogeneously being solidified in the predetermined shape.

In the method of manufacturing the block, the block is preferably in a form of a rectangular parallelepiped in which a longer width of the block is an integer multiple of a shorter width of the block with the integer multiple being more than or equal to 2.

The present invention relates to a block using a waste and usable to construct a natural disaster prevention structure, for example.

In a block according to the present invention, a surface of each of one or a plurality of solid matters in each of which a material including a waste is solidified in a predetermined shape is covered with a film composed of a cement material by coating each of the one or plurality of solid matters with the cement material, and the one or plurality of coated solid matters are sealed in a cement material.

In the block, preferably, the one or plurality of solid matters each coated with the cement material are each tied with a belt and are sealed in the cement material.

In the block, a plurality of iron bars are preferably disposed.

In the block, preferably, each of the one or plurality of solid matters is formed using a mixture including the waste and the cement material homogeneously, and is solidified by hardening the cement material to integrate the waste with the cement material, or each of the one or plurality of solid matters is formed with the waste being compressed in the predetermined shape.

In the block, a plurality of the solid matters are preferably sealed in the cement material with the plurality of the solid matters being disposed side by side in a frontward/rearward direction and a leftward/rightward direction and being disposed in a form of a plurality of stacks in an upward/downward direction.

In a block according to the present invention, one or a plurality of solid matters in each of which a material including a waste is solidified in a predetermined shape are sealed in a cement material, a plurality of sets of protrusions and recesses are provided at an outer surface of the block, each of the recesses having a shape engageable with a corresponding protrusion, the recesses being located opposite to the respective protrusions, at least one set of a protrusion and a recess are provided only at front and rear side surfaces of the outer surface and at least one set of a protrusion and a recess are provided only at left and right side surfaces of the outer surface, and the sets of protrusions and recesses extend across respective entire heights of the front, rear, left, and right side surfaces of the block.

In the block, the one or plurality of solid matters each coated with a cement material to each have a surface covered with a film composed of the cement material are preferably sealed in a cement material.

In the block, preferably, each of the one or plurality of solid matters is formed using a mixture including the waste and the cement material homogeneously, and is solidified by hardening the cement material to integrate the waste with the cement material, or each of the one or plurality of solid matters is formed with the waste being compressed in the predetermined shape.

In the block, a plurality of the solid matters are preferably sealed in the cement material with the plurality of the solid matters being disposed side by side in a frontward/rearward direction and a leftward/rightward direction and being disposed in a form of a plurality of stacks in an upward/downward direction.

In the block, a plurality of iron bars are preferably disposed.

In a block according to the present invention, one or a plurality of solid matters in each of which a material including a waste is solidified in a predetermined shape are sealed in a cement material, at least one protrusion and at least one recess are provided at an outer surface of the block, the recess having a shape engageable with a corresponding protrusion, and the protrusion and the recess are provided only at an upper end surface and a lower end surface of the outer surface of the block.

In the block, the one or plurality of solid matters each coated with a cement material to each have a surface covered with a film composed of the cement material are preferably sealed in a cement material.

In the block, preferably, each of the one or plurality of solid matters is formed using a mixture including the waste and the cement material homogeneously, and is solidified by hardening the cement material to integrate the waste with the cement material, or each of the one or plurality of solid matters is formed with the waste being compressed in the predetermined shape.

In the block, a plurality of the solid matters are preferably sealed in the cement material with the plurality of the solid matters being disposed side by side in a frontward/rearward direction and a leftward/rightward direction and being disposed in a form of a plurality of stacks in an upward/downward direction.

In the block, a plurality of iron bars are preferably disposed.

In the block, the block is preferably in a form of a rectangular parallelepiped in which a longer width of the block is an integer multiple of a shorter width of the block with the integer multiple being more than or equal to 2.

The present invention relates to a block structure including blocks each using a waste and each usable to construct a natural disaster prevention structure, for example.

### Claims for Block Structure with Coating

A block structure according to the present invention includes a plurality of blocks in combination, wherein in each of the plurality of blocks, a surface of each of one or a plurality of solid matters in each of which a material including a waste is solidified in a predetermined shape is covered with a film composed of a cement material by coating each of the one or plurality of solid matters with the cement material, and the one or plurality of coated solid matters are sealed in a cement material.

In the block structure, preferably, each of the one or plurality of solid matters is formed using a mixture including the waste and the cement material homogeneously, and is solidified by hardening the cement material to integrate the waste with the cement material, or each of the one or plurality of solid matters is formed with the waste being compressed in the predetermined shape.

In the block structure, blocks adjacent in the frontward/rearward direction, the leftward/rightward direction, or the upward/downward direction are preferably connected by a steel member.

A block structure according to the present invention includes a plurality of blocks in combination, wherein in each of the plurality of blocks, one or a plurality of solid matters in each of which a material including a waste is solidified in a predetermined shape are sealed in a cement material, a plurality of sets of protrusions and recesses are provided at an outer surface of each of the blocks, each of the recesses having a shape engageable with a corresponding protrusion, the recesses being located opposite to the respective protrusions, at least one set of a protrusion and a recess is provided only at front and rear side surfaces of the outer surface and at least one set of a protrusion and a recess is provided only at left and right side surfaces of the outer surface, and the sets of protrusions and recesses extend across respective entire heights of the front, rear, left, and right side surfaces of the block, and the blocks included in the block structure are coupled by engagement between the protrusions and the recesses.

In the block structure, in each of the plurality of blocks, the one or plurality of solid matters each coated with a cement material to each have a surface covered with a film composed of the cement material are preferably sealed in a cement material.

In the block structure, preferably, each of the one or plurality of solid matters is formed using a mixture including the waste and the cement material homogeneously, and is solidified by hardening the cement material to integrate the waste with the cement material, or each of the one or plurality of solid matters is formed with the waste being compressed in the predetermined shape.

In the block structure, preferably, a plurality of columnar bodies in each of which the blocks are disposed in a form of a plurality of stacks in an upward/downward direction are disposed side by side in a frontward/rearward direction and a leftward/rightward direction, and each of the plurality of columnar bodies is constituted of a plurality of types of blocks with respective heights such that a position of a boundary between adjacent blocks in the upward/downward direction in each columnar body is displaced in the upward/downward direction with respect to a position of a boundary between adjacent blocks in the upward/downward direction in each of columnar bodies adjacent to the columnar body in the frontward/rearward direction and the leftward/rightward direction.

In the block structure, blocks adjacent in the frontward/rearward direction, the leftward/rightward direction, or the upward/downward direction are fixedly connected by a steel member.

A block structure according to the present invention includes a plurality of blocks in combination, wherein in each of the plurality of blocks, one or a plurality of solid matters in each of which a material including a waste is solidified in a predetermined shape are sealed in a cement material, at least one protrusion and at least one recess are provided at an outer surface of each of the blocks, the protrusion and the recess are provided only at an upper end surface and a lower end surface of the outer surface of the concrete block, and the blocks included in the block structure are coupled by engagement between the protrusions and the recesses.

In the block structure, in each of the blocks, the one or plurality of solid matters each coated with a cement material to each have a surface covered with a film composed of the cement material are preferably sealed in a cement material.

In the block structure, preferably, each of the one or plurality of solid matters is formed using a mixture including the waste and the cement material homogeneously, and is solidified by hardening the cement material to integrate the waste with the cement material, or each of the one or plurality of solid matters is formed with the waste being compressed in the predetermined shape.

In the block structure, preferably, an upper first block is disposed on and over a plurality of lower blocks disposed side by side and adjacent in a frontward/rearward direction or a leftward/rightward direction such that an entire longer width and/or an entire shorter width of the upper first block is supported by the plurality of lower blocks, and the protrusions or recesses provided at upper end surfaces of the plurality of lower blocks are engaged with the recesses or protrusions provided at the lower end surface of the upper first block to couple the plurality of lower blocks and the upper first block.

In the block structure, preferably, each of the blocks has a longer width that is an integer multiple of a shorter width of the block with the integer multiple being more than or equal to 2, an upper third block is laid on a projection portion of a lower second block projecting outward with respect to the upper first block such that the first block and the third block are adjacent in the frontward/rearward direction or the leftward/rightward direction and an entire longer width or an entire shorter width of the third block is supported by the second block, and as with the upper first block, the upper third block is coupled to the lower second block by engagement between the protrusions or recesses provided at the upper end surface of the projection portion of the lower second block and the recesses or protrusions provided at the lower end surface of the upper third block.

In the block structure, preferably, the longer width of each of the blocks is twice as large as the shorter width of the block, and the projection portion of the second block has a range that is 1/2 of the longer width of the second block.

In the block structure, blocks adjacent in the frontward/rearward direction, the leftward/rightward direction, or the upward/downward direction are preferably connected by a steel member.

A block structure according to the present invention includes a plurality of blocks in combination, wherein in each of the plurality of blocks, one or a plurality of solid matters in each of which a material including a waste is solidified in a predetermined shape are sealed in a cement material, as the blocks in combination, a plurality of types of blocks having different sizes are used, and the plurality of types of blocks are stacked randomly.

In the block structure, in each of the plurality of blocks, the one or plurality of solid matters each coated with a cement material to each have a surface covered with a film composed of the cement material are preferably sealed in a cement material.

In the block structure, preferably, each of the one or plurality of solid matters is formed using a mixture including the waste and the cement material homogeneously, and is solidified by hardening the cement material to integrate the waste with the cement material, or each of the one or plurality of solid matters is formed with the waste being compressed in the predetermined shape.

In the block structure, each of the blocks in combination is preferably in a form of a hexahedron.

The present invention relates to a method of constructing a block structure including blocks each using a waste and each usable to construct a natural disaster prevention structure, for example.

In a method of constructing a block structure according to the present invention, the block structure includes a plurality of blocks in combination, in each of the blocks, one or a plurality of solid matters in each of which a material including a waste is solidified in a predetermined shape are sealed in a cement material, and by naturally dropping a plurality of types of blocks having different sizes onto an installation surface, the plurality of types of blocks are stacked randomly.

In the method of constructing the block structure, in each of the plurality of blocks, the one or plurality of solid matters each coated with a cement material to each have a surface covered with a film composed of the cement material are preferably sealed in a cement material.

In the method of constructing the block structure, preferably, each of the one or plurality of solid matters is formed using a mixture including the waste and the cement material homogeneously, and is solidified by hardening the cement material to integrate the waste with the cement material, or each of the one or plurality of solid matters is formed with the waste being compressed in the predetermined shape.

In the method of constructing the block structure, each of the blocks in combination is preferably in a form of a hexahedron.

### ADVANTAGEOUS EFFECTS OF INVENTION

According to the present invention, the block is formed using a waste, thereby reducing manufacturing cost for the block. Therefore, by using the block according to the present invention, the expense required to construct the block structure can be reduced. In particular, since the present invention relates to constructing a natural disaster prevention structure, the reduced expense in constructing a natural disaster prevention structure can promote deployment of operations for disaster countermeasures, thereby helping to protect lives and environment. Further, since the block includes the waste, a large amount of waste caused daily can be effectively used for construction of the structure and for countermeasures against disaster.

In the present invention, the solid matter is coated with the cement material, and the coated solid matter is sealed in the cement material, whereby the solid matter is double-protected by the cement materials. Therefore, even if damage such as cracking is caused in the cement material having the solid matter sealed therein, the solid matter is prevented from being collapsed or flowing to outside.

Further, in the present invention, when the protrusions and the recesses are provided to extend across the respective entire heights of the front, rear, left, and right side surfaces of the block, the protrusions or the recesses of the block can be engaged with the recesses or the protrusions of other blocks to be adjacent thereto in the frontward/rearward direction and the leftward/rightward direction only by lowering the foregoing block. Hence, the block does not need to be move laterally when constructing the structure. Thus, the blocks can be coupled by engaging one block with the other blocks from above, whereby the blocks can be coupled readily.

Further, in the present invention, when the protrusions and the recesses are provided only at the upper end surface and lower end surface of the block, the protrusions or the recesses formed on the lower end surface of the block can be engaged with the recesses or the protrusions formed on the upper end surface of another block to be adjacent thereto on the lower side only by lowering the foregoing block. Hence, the block does not need to be moved laterally when constructing the structure. Thus, the blocks can be coupled by engaging one block with the other block from above, whereby the blocks can be coupled readily.

Further, in the present invention, when the plurality of types of blocks having different sizes are used to construct a block structure, a block can be inserted into a space between blocks by a simple operation of naturally dropping the blocks. Hence, a structure in which blocks are densely gathered can be constructed.

### BRIEF DESCRIPTION OF DRAWINGS

Fig. 1 is a flowchart showing a method of manufacturing a block, a method of assembling a structure, and a method of using the structure.
Fig. 2 is a schematic diagram illustrating a solid matter forming step.
Fig. 3 is a schematic diagram illustrating a coating step.
Fig. 4 is a schematic diagram illustrating a block forming step.
Fig. 5 is a schematic diagram illustrating the block forming step and subsequent to Fig. 4.
Fig. 6 is a perspective view of a structure according to a first embodiment.
Fig. 7 is a cross sectional perspective view taken along a line XI-XI of Fig. 6.
Fig. 8 is a perspective view showing an operation of assembling the structure according to the first embodiment.
Fig. 9 is a plan view of the structure according to the first embodiment.
Fig. 10 is a schematic diagram of an example in which the structure according to the first embodiment is used for a breakwater.
Fig. 11 is a schematic diagram of an example in which the structure according to the first embodiment is used for an embankment for river.
Fig. 12 is a perspective view of a block according to a second embodiment.
Fig. 13 is a diagram showing the block according to the second embodiment, Fig. 13 (A) is a plan view thereof and Fig. 13 (B) is a perspective view showing a portion of an upper end surface thereof.
Fig. 14 is a diagram showing the block according to the second embodiment, Fig. 14 (A) is a bottom view thereof and Fig. 14 (B) is a perspective view showing a portion of a lower end surface thereof.
Fig. 15 is a diagram showing the structure according to the second embodiment, Fig. 15 (A) is a perspective view thereof and Fig. 15 (B) is a plan view thereof.
Fig. 16 is a perspective view showing an operation of assembling the structure according to the second embodiment.
Fig. 17 is a perspective view of a block according to a third embodiment.
Fig. 18 is a perspective view of a structure according to the third embodiment.
Fig. 19 is a front view of the structure according to the third embodiment.
Fig. 20 is a front view of the structure according to the third embodiment.
Fig. 21 is a diagram illustrating a method of constructing a block structure according to PTL 4.
Fig. 22 is a diagram illustrating a problem of the block structure according to PTL 4.

### DESCRIPTION OF EMBODIMENTS

A feature of the present invention lies in that a waste is used to form a block usable to construct a structure, particularly, a natural disaster prevention structure for land, sea, or river. Examples of the structure that can be constructed using the block of the present invention include (but not limited to) the following structures (1) to (4):
(1) a natural disaster prevention structure such as a breakwater for protecting from waves from open sea, an embankment for preventing entrance of river water or sea water, a wave-dissipating block for attenuating energy of wave, a dam or weir for flood control or water utilization, a sand arrestation dam or sand arrestation weir for preventing mudflow or landslide, or an evacuation shelter;
(2) a foundation block installed on a ground surface or other support surfaces;
(3) a block for a surface of wall or a surface of slope (embankment slope) for sand retention; and
(4) a sill.

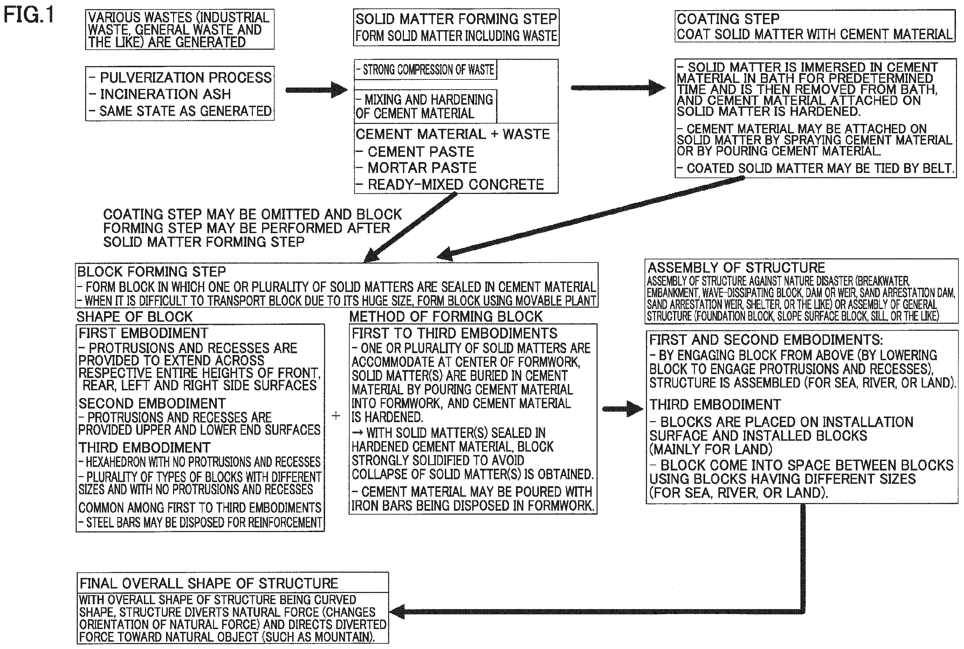

Fig. 1 is a flowchart showing a method of manufacturing a block, a method of assembling a structure, and a method of using the structure.

When manufacturing the block, a solid matter forming step, a coating step, and a block forming step are performed. In the solid matter forming step, a solid matter is formed in which a material including a waste is solidified in a predetermined shape. In the coating step, a surface of the solid matter is covered with a film composed of a cement material by attaching the cement material on the surface of the solid matter and hardening the cement material attached on the solid matter so as to coat the solid matter with the cement material. In the block forming step, a block in which one or a plurality of the solid matters each coated with the cement material are sealed in a cement material is formed by accommodating, in a formwork, the one or plurality of the solid matters each coated with the cement material, pouring the cement material into the formwork, and hardening the cement material.

The waste usable to manufacture the block is a waste discarded as an industrial waste, a general waste, or the like. Examples of the waste include waste plastics, vinyl, metal scrap, slag, shredder dust, and the like. It should be noted that the waste may be finely pulverized in advance by a pulverization process or the like, may be an incineration ash, or may be in the same state as generated. In the present invention, the cement material refers to a material including hydraulic cement. Examples of the cement material include: a cement paste in which water is mixed with cement; a mortar paste in which fine aggregates are mixed with a cement paste; and a ready-mixed concrete in which fine aggregates and coarse aggregates are mixed with a cement paste.

The following describes a block, a method of manufacturing the block, a structure using such blocks, and the like according to first to third embodiments.

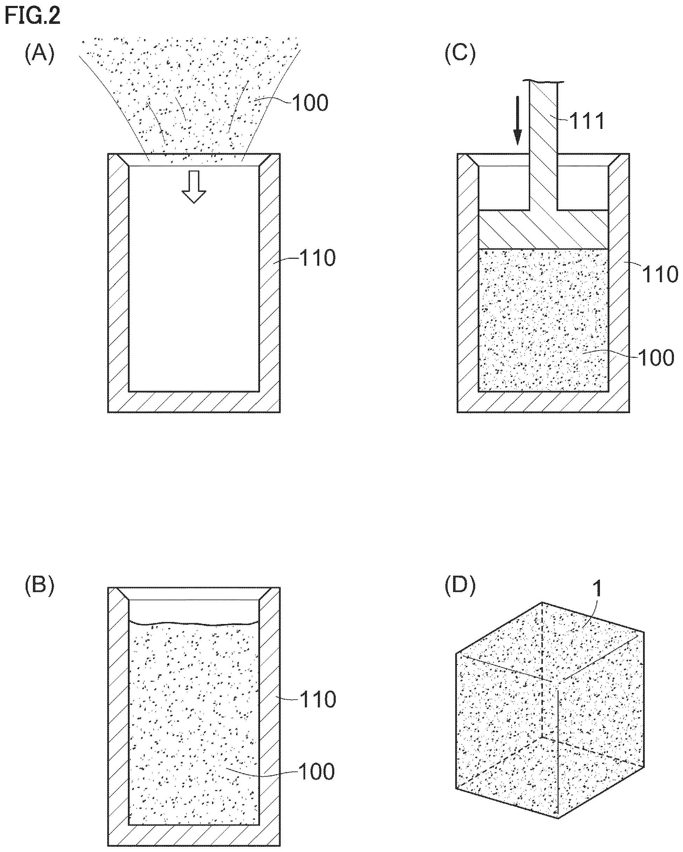

First, the first embodiment will be described. In the first embodiment, in the solid matter forming step, a solid matter 1 is formed by, for example, a method of compressing (pressing) a waste 100. For example, as shown in Fig. 2, by using a device including a shaping container 110, supplying means (not shown) for supplying waste 100 to shaping container 110, and pressure application means 111 for applying pressure onto waste 100 accommodated in shaping container 110, waste 100 is firmly compressed by pressure applied by pressure application means 111 (Fig. 2 (C)) after introducing waste 100 into shaping container 110 (Figs. 2 (A) and 2 (B)). Thus, solid matter 1 is formed with waste 100 being compressed in a predetermined shape (Fig. 2 (D)). It should be noted that during the application of pressure, shaping container 110 may be externally heated by a heater (not shown) to soften and melt part of waste 100. In this case, solid matter 1 solidified in the predetermined shape is formed by cooling down softened and melted waste 100 to a normal temperature through, for example, natural cooling, air cooling, water cooling, or the like.

A material of solid matter 1 may include a cement material in addition to waste 100. In this case, in the solid matter forming step, by mixing waste 100 and the cement material in shaping container 110 using a stirrer or the like, a mixture including waste 100 and the cement material homogeneously is formed. Then, by hardening the cement material in the mixture, the mixture including waste 100 and the cement material homogeneously is solidified into the predetermined shape, thereby forming solid matter 1 in which waste 100 and the cement material are integrated. It should be noted that waste 100 may be compressed into the predetermined shape.

In the first embodiment, solid matter 1 is in the form of a cube; however, the outer shape of solid matter 1 is not particularly limited, and solid matter 1 may be in the form of a rectangular parallelepiped, a cylinder, a prism, or the like. The dimension (height, width, and depth) of solid matter 1 is not particularly limited, and may be appropriately set in accordance with the dimension of a below-described block 2, the number of solid matter(s) 1 sealed in block 2, a manner of installation, and the like.

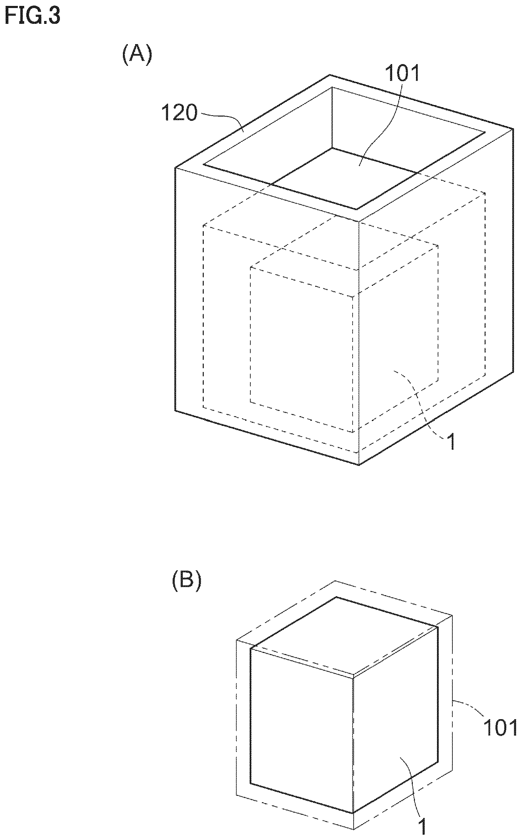

Next, in the coating step, as shown in Fig. 3, solid matter 1 is immersed, for a predetermined time, in a cement material 101 stored in a bath 120 and is then removed from bath 120, and cement material 101 attached on solid matter 1 is hardened. Thus, solid matter 1 is coated with cement material 101 and the entire surface of solid matter 1 is covered with a film of cement material 101 having a predetermined thickness, thereby preventing waste 100 in solid matter 1 from being exposed.

It should be noted that solid matter 1 may be coated with cement material 101 by hardening cement material 101 sprayed on solid matter 1. Alternatively, solid matter 1 may be coated with cement material 101 by hardening cement material 101 having been poured onto the surface of solid matter 1. In order to reinforce solid matter 1, solid matter 1 coated with cement material 101 may be tied by a belt. Alternatively, solid matter 1 tied by a belt may be coated with cement material 101.

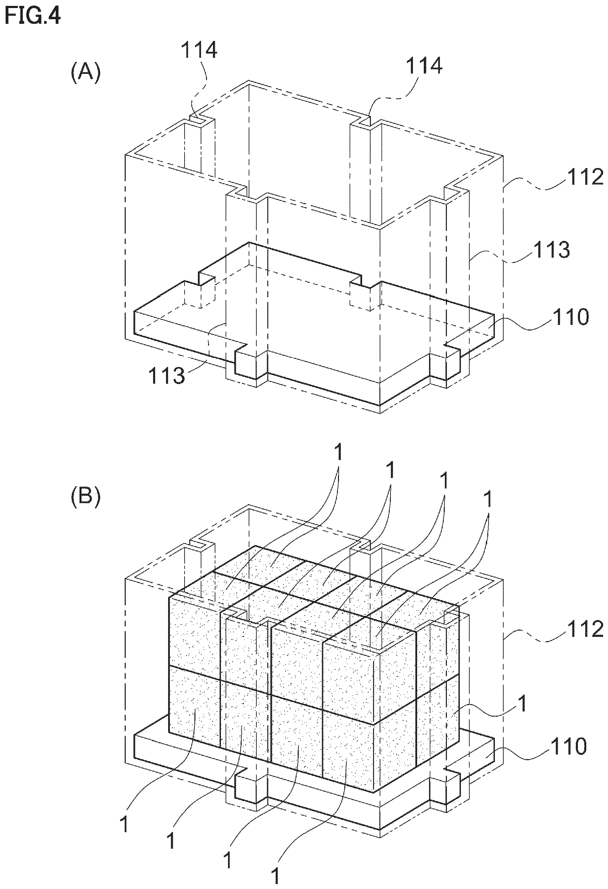

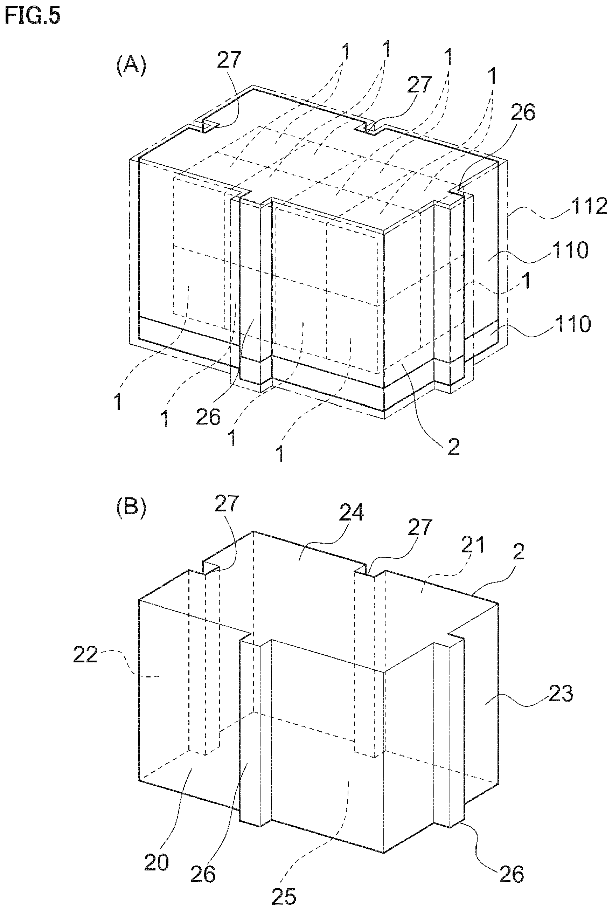

Next, in the block forming step, as shown in Figs. 4 and 5, a plurality of solid matters 1 each coated with cement material 101 are accommodated at a substantially central position of a formwork 112. Then, cement material 101 is poured into formwork 112 to bury the plurality of solid matters 1 in cement material 101. For example, cement material 101 is poured into formwork 112 up to a predetermined height in advance (Fig. 4 (A)), and then the plurality of solid matters 1 are placed on cement material 101 (Fig. 4 (B)). Next, cement material 101 is poured into formwork 112 until the plurality of solid matters 1 are covered (Fig. 5 (A)), thereby burying the plurality of solid matters 1 in cement material 101. After cement material 101 is hardened, formwork 112 is disassembled, thereby obtaining a block 2 in which the plurality of solid matters 1 are sealed in cement material 101 (Fig. 5 (B)). It should be noted that one solid matter 1 may be provided in block 2.

In the first embodiment, a plurality of solid matters 1 (two columns in the frontward/rearward direction and four rows in the leftward/rightward direction in the shown example) are disposed side by side in the frontward/rearward direction and the leftward/rightward direction and are disposed in the form of a plurality of stacks (two stacks in the shown example) in the upward/downward direction. In this state, the plurality of solid matters 1 are sealed in cement material 101. However, the manner of installing solid matters 1 in block 2 is not particularly limited. For example, one solid matter 1 coated with cement material 101 may be sealed in cement 101 when the dimension of solid matter 1 is large. It should be noted that as shown in Fig. 4 (B), when solid matters 1 are placed substantially at the central position of formwork 112 and cement material 101 is poured into formwork 112, solid matters 1 can be sealed in cement material 101 having a uniform and sufficient thickness. Thus, solid matters 1 can be firmly sealed in block 2.

It should be noted that in the block forming step, cement material 101 may be poured with a plurality of iron bars (not shown) being disposed in formwork 112. Thus, the plurality of iron bars are disposed in block 2, with the result that block 2 can be reinforced by the plurality of iron bars.

In the first embodiment, as shown in Fig. 5 (B), a plurality of sets of protrusions 26 and recesses 27 (hereinafter, referred to as "sets of protrusions 26 and recesses 27") are provided at an outer surface of block 2. Each of recesses 27 has a shape engageable with a corresponding protrusion 26. Recesses 27 are located opposite to respective protrusions 26. As will be described in detail later, when forming a structure 3 in combination with a plurality of blocks 2 (hereinafter, simply referred to as "structure 3"), adjacent blocks 2 can be coupled by engagement between protrusions 26 and recesses 27.

In the block forming step of the first embodiment, as shown in Figs. 4 (A), 4 (B) and 5 (A), the plurality of sets of protrusions 26 and recesses 27 can be provided at the outer surface of block 2 by providing a plurality of sets of first protuberances 113 and second protuberances 114 at formwork 112. First protuberances 113 protrude outward and second protuberances 114 protrude inward. Second protuberances 114 are located opposite to respective first protuberances 113.

Specifically, by providing first protuberances 113 at two facing surfaces of the front, rear, left and right side surfaces of formwork 112 and providing second protuberances 114 at two facing surfaces of the front, rear, left and right side surfaces of formwork 112 as shown in Figs. 4 (A) and 4 (B), the sets of protrusions 26 and recesses 27 can be provided at front and rear side surfaces 20, 21 and left and right side surfaces 22, 23 of the outer surface of block 2 as shown in Fig. 5 (B) while no protrusions 26 and recesses 27 are provided at upper and lower end surfaces 24, 25. It should be noted that protrusions 26 and recesses 27 of block 2 are disposed at side surfaces 20 to 23 so as to engage with recesses 27 and protrusions 26 of blocks 2 disposed adjacent thereto in the frontward/rearward and leftward/rightward directions. In the shown example, one set of protrusion 26 and recess 27 are provided at front and rear side surfaces 20, 21 and one set of protrusion 26 and recess 27 are provided at left and right side surfaces 22, 23; however, two or more sets of protrusions 26 and recesses 27 can be provided at front and rear side surfaces 20, 21 and two or more sets of protrusions 26 and recesses 27 can be provided at left and right side surfaces 22, 23. For example, two protrusions 26 can be provided at front side surface 20, two recesses 27 engageable with two corresponding protrusions 26 can be provided at rear side surface 21 (i.e., two sets of protrusions 26 and recesses 27 can be provided at front and rear side surfaces 20, 21), four protrusions 26 can be provided at left side surface 22, and four recesses 27 engageable with four corresponding protrusions 26 can be provided at right side surface 23 (i.e., four sets of protrusions and recesses can be provided at left and right side surfaces 22, 23). Further, both a protrusion 26 and a recess 27 may be provided at each of side surfaces 20 to 23.

Further, in the first embodiment, as shown in Figs. 4 (A) and 4 (B), first protuberances 113 and second protuberances 114 are provided to extend across the respective entire heights of front, rear, left, and right side surfaces 20 to 23 of formwork 112. Hence, the sets of protrusions 26 and recesses 27 provided at the front, rear, left, and right side surfaces of the block can extend across the respective entire heights of side surfaces 20 to 23 of block 2. It should be noted that in the first embodiment, each of protrusions 26 and recesses 27 is in the form of a rectangle when viewed in a cross section; however, the cross sectional shape of each of protrusions 26 and recesses 27 is not particularly limited. Each of protrusions 26 and recesses 27 may be in the form of a trapezoid, a triangle, a semicircle, or the like.

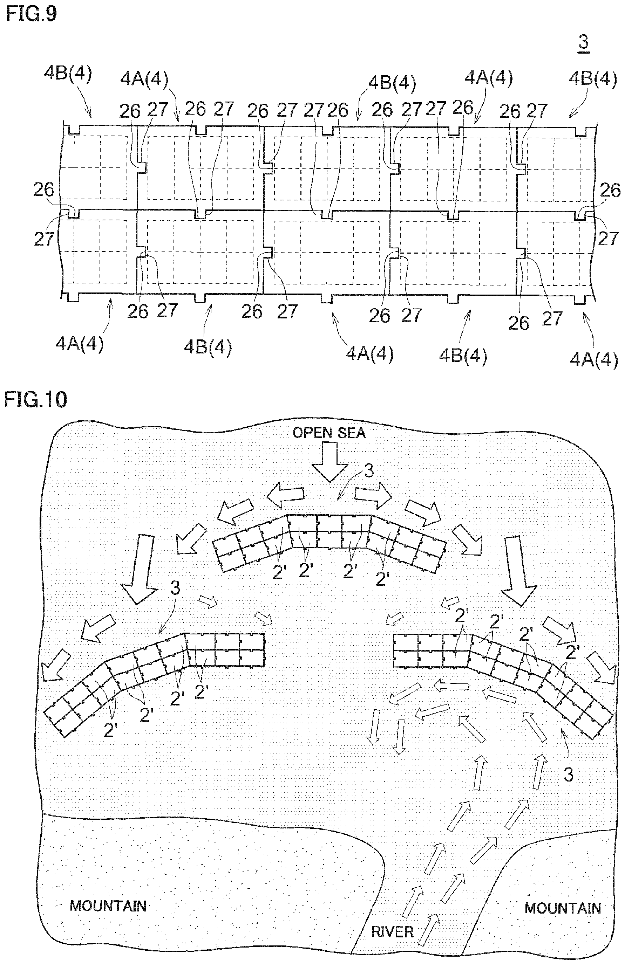

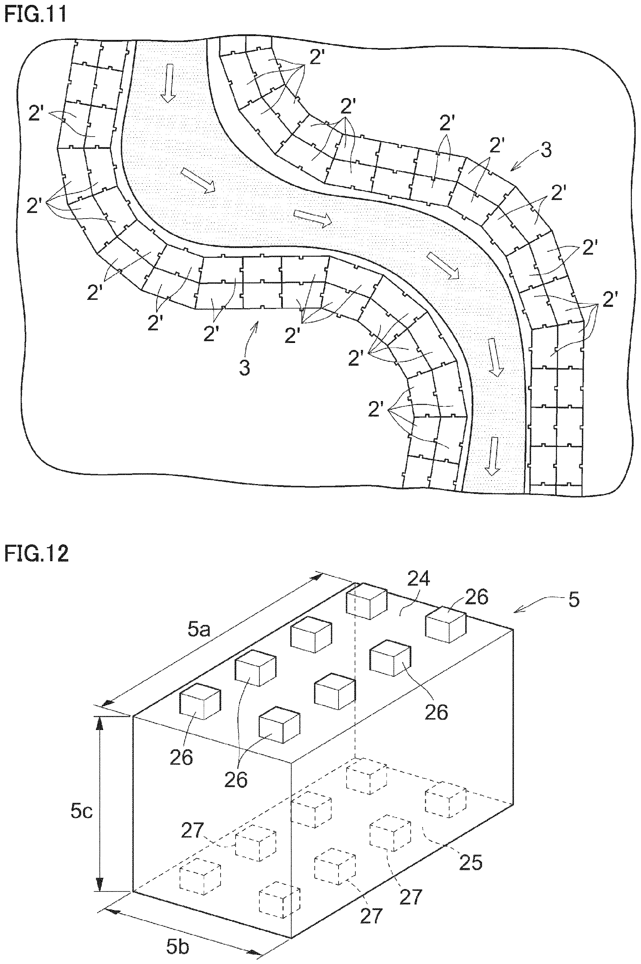

In the first embodiment, block 2 is in the form of a rectangular parallelepiped (hexahedron); however, the outer shape of block 2 is not particularly limited. Block 2 may be in the form of a cube (hexahedron), for example. It should be noted that when block 2 is in the form of a rectangular parallelepiped, the longer width of block 2 can be an integer multiple of the shorter width of block 2 with the integer multiple being, for example, more than or equal to 2 (for example, the longer width of block 2 can be twice as large as the shorter width of block 2). Further, as shown in Figs. 10 and 11, for example, block 2 may be in the form of a trapezoid when viewed in a cross section with left side surface 22 and/or right side surface 23 being inclined with respect to front side surface 20 and rear side surface 21, rather than being orthogonal thereto. The dimension (height, width, and depth) of block 2 is not particularly limited and can be suitably set in accordance with the dimension of below-described structure 3 including blocks 2. However, by manufacturing a large-sized block 2 having a large dimension, block 2 becomes robust and heavy in weight. The dimension of block 2 may be, for example, 4 m to 10 m in width, 4 m to 10 m in depth, and 4 m to 10 m in height. It should be noted that in order to construct a structure, it is preferable to prepare a plurality of types of blocks 2 having different heights.

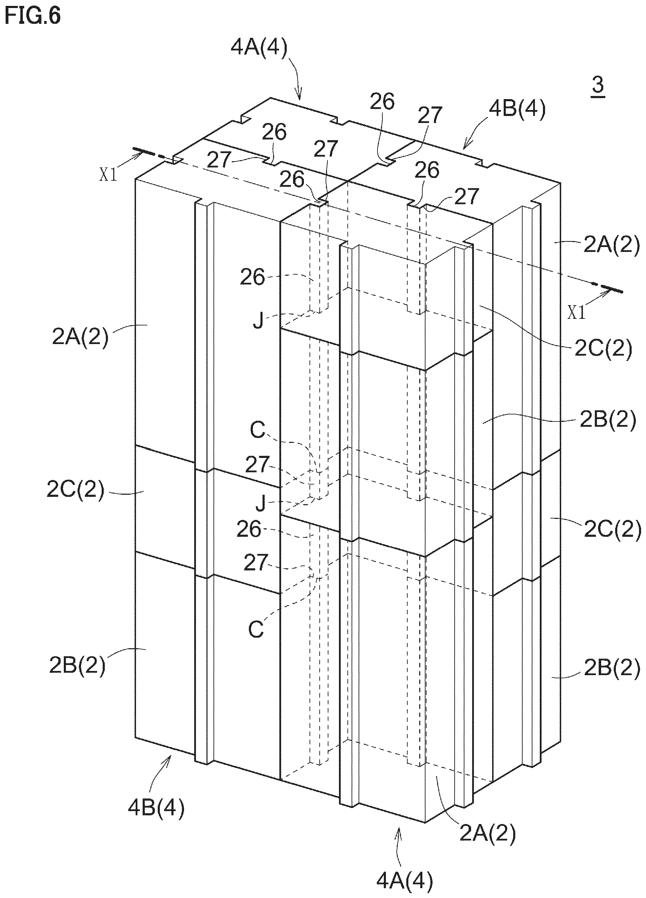

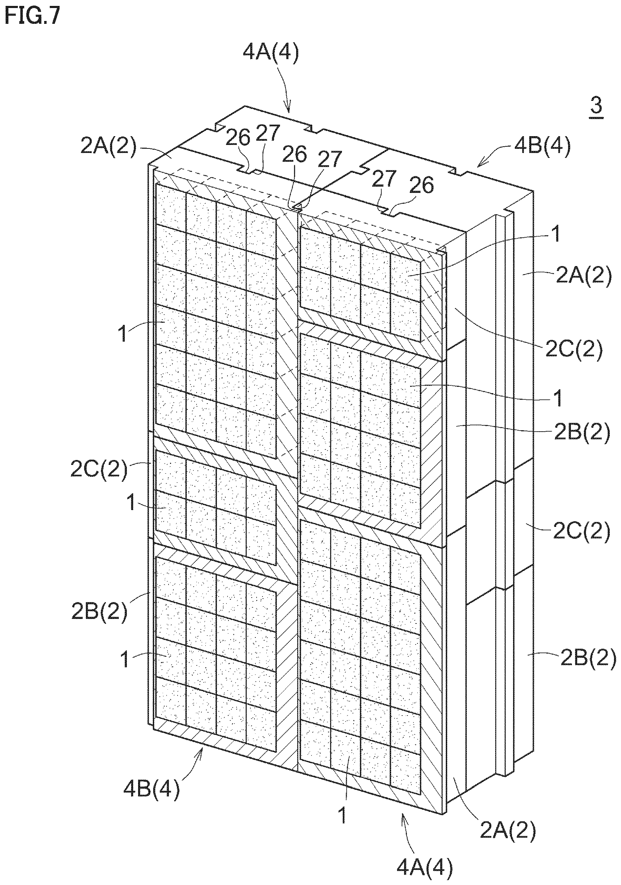

In the first embodiment, a structure in which a plurality of blocks 2 described above are combined can be used as the breakwater, the embankment, the wave-dissipating block, the dam or weir, the sand arrestation dam or sand arrestation weir, the shelter, the foundation block, the block for a surface of slope, the sill, or the like. Each of Figs. 6 and 7 shows an exemplary structure constructed in combination with the plurality of blocks 2 (Fig. 6 is a perspective view of structure 3 and Fig. 7 is a cross sectional perspective view taken along a line XI-XI of Fig. 6).

Structure 3 shown in each of Figs. 6 and 7 is assembled by disposing a plurality of blocks 2 side by side in the frontward/rearward and leftward/rightward directions and by disposing a plurality of blocks 2 in the form of stacks in the upward/downward direction.

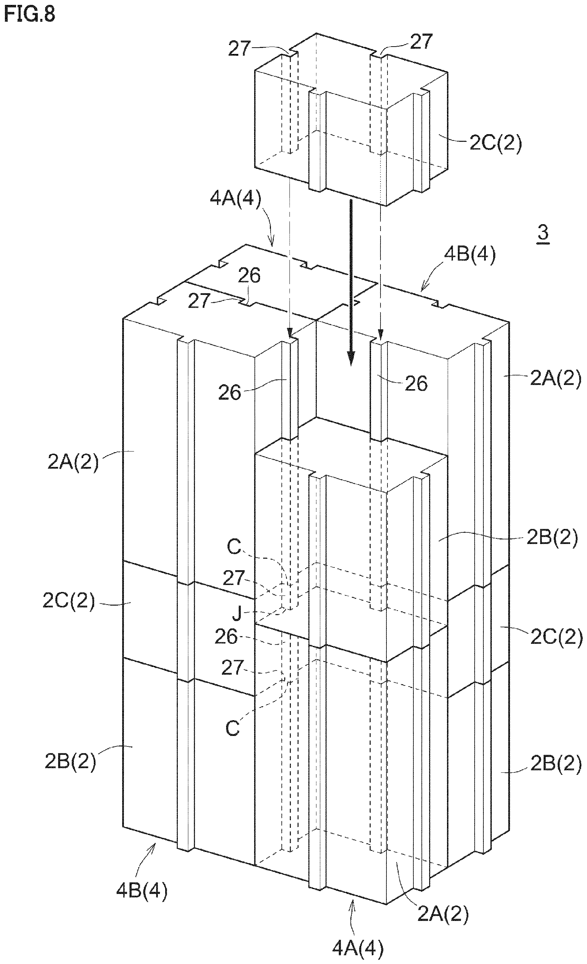

In the first embodiment, in structure 3, the plurality of blocks 2 are coupled by engagement between protrusions 26 and recesses 27. Specifically, adjacent blocks 2 in each of the frontward/rearward direction and the leftward/rightward direction are coupled without positional displacement by engaging protrusion 26 of one block 2 with recess 27 of the other blocks 2. In structure 3 of the first embodiment, blocks 2, 2 can be coupled by engaging one block 2 with the other blocks 2 from above because each of recesses 27 is provided to extend across the entire height of a corresponding side surface of block 2. That is, as shown in Fig. 8, by lowering a block 2, protrusions 26 or recesses 27 of block 2 can be engaged with recesses 27 or protrusions 26 of other blocks 2 to be adjacent to foregoing block 2 in the frontward/rearward and leftward/rightward directions. Block 2 does not need to be moved laterally. Therefore, blocks 2, 2 to be adjacent in each of the frontward/rearward and leftward/rightward directions can be readily coupled. It should be noted that for ease of the engagement of block 2 from above, the lateral cross section of recess 27 is preferably larger than the lateral cross section of a corresponding protrusion 26.

Structure 3 includes a plurality of columnar bodies 4 disposed side by side in the frontward/rearward and leftward/rightward directions (see Fig. 9). Each columnar body 4 includes a plurality of types of blocks 2 with respective heights. The plurality of types of blocks 2 in each of columnar bodies 4 are disposed such that the position of a boundary between adjacent blocks 2, 2 in the upward/downward direction in columnar body 4 is displaced in the upward/downward direction with respect to the position of a boundary between adjacent blocks 2, 2 in the upward/downward direction in each of columnar bodies 4 adjacent to foregoing columnar body 4 in the frontward/rearward and leftward/rightward directions. In this way, adjacent blocks 2, 2 of each columnar body 4 in the upward/downward direction are coupled.

For example, in the shown example, each of the plurality of columnar bodies 4 is constituted of three types of blocks 2A, 2B, 2C with different heights. In a certain columnar body 4A of the plurality of columnar bodies 4, block 2A having the highest height, block 2B having the next highest height, and block 2C having the lowest height are stacked in this order from the bottom. In another columnar body 4B, block 2B, block 2C, and block 2A are stacked in this order from the bottom. The positions of respective boundaries B between adjacent blocks 2A to 2C in the upward/downward direction in each of columnar bodies 4A, 4B are displaced in the upward/downward direction with respect to the positions of respective boundaries B between adjacent blocks 2A to 2C in the upward/downward direction in each of columnar bodies adjacent thereto in the frontward/rearward and leftward/rightward directions. That is, each of boundaries B faces one of side surfaces 20 to 23 of blocks 2A to 2C of one of adjacent columnar bodies 4 in the frontward/rearward and leftward/rightward directions.

Therefore, in each of columnar bodies 4A, 4B, a protrusion 26 of one of blocks 2A to 2C in adjacent columnar body 4B or 4A is engaged with two recesses 27, 27 of adjacent blocks 2A to 2C in the upward/downward direction, and protrusion 26 extends over a juncture J between two recesses 27, 27. Two protrusions 26, 26 of adjacent blocks 2A to 2C in the upward/downward direction in each of columnar bodies 4A, 4B are engaged with a recess 27 of one of blocks 2A to 2C of adjacent columnar body 4B or 4A, and a connection portion C between two protrusions 26, 26 is positioned in recess 27. Thus, in each of columnar bodies 4A, 4B, adjacent blocks 2A to 2C in the upward/downward direction are coupled without positional displacement.

As described above, columnar bodies 4A, 4B are combined such that two recesses 27, 27 or protrusions 26, 26 of adjacent blocks 2A to 2C in the upward/downward direction are engaged with a protrusion 26 or recess 27 of one block 2. Thus, blocks 2A to 2C included in structure 3 are coupled without positional displacement in any of the frontward/rearward direction, the leftward/rightward direction, and the upward/downward direction.

The method of constructing structure 3 using columnar bodies 4A, 4B each constituted of the three types of blocks 2A to 2C is merely exemplary. Each columnar body 4 may be constituted of blocks 2 having any heights as long as a boundary between adjacent blocks 2 in the upward/downward direction in each columnar body 4 is displaced in the upward/downward direction with respect to a boundary between adjacent blocks 2 in the upward/downward direction in each of columnar bodies 4 adjacent to foregoing columnar body 4 in the frontward/rearward and leftward/rightward directions.

One of upper end surface 24 and lower end surface 25 of each block 2 may be provided with a protrusion 26 and the other may be provided with a recess 27. In this case, two adjacent blocks 2, 2 in the upward/downward direction are also coupled by engagement between protrusion 26 and recess 27.

The dimension (height, width, and depth) of structure 3 is not particularly limited. The number of blocks 2 disposed in the frontward/rearward and leftward/rightward directions and the number of blocks 2 disposed in the form of stacks in the upward/downward direction can be appropriately set in accordance with a purpose of use of structure 3. The overall shape of structure 3 is not particularly limited and may be a shape corresponding to the purpose of use. For the sake of protection while reducing a natural force, structure 3 preferably has a curved shape as a whole when viewed in a plan. It should be noted that since structure 3 is used as a natural disaster prevention structure, a foundation block, a block for a surface of slope, or a sill, each one block 2 in structure 3 has to be large and heavy in weight. Further, blocks 2, 2 have to be coupled to endure a large force applied during disaster or the like.

Structure 3 is mainly used as a structure for sea or river, but may be used as a structure for land.

Fig. 10 shows an example in which structure 3 is used for a breakwater. In the shown example, structure 3 has a plurality of blocks 2 combined in the form of an arc of a fan when viewed in a plan. Structure 3 includes blocks 2' each in the form of a trapezoid when viewed in a cross section among the plurality of blocks 2 included in structure 3. Hence, structure 3 has a curved shape as a whole (specifically, in the form of an arc of a fan when viewed in a plan). With structure 3 having such a curved shape, structure 3 can divert a natural force such as a force of rough wave from open sea (structure 3 can change the orientation of the natural force) and can direct the diverted force toward a natural object such as a mountain. This makes it possible to prevent an artificial object in a harbor, a land, or the like from being destroyed by the natural force. Although not shown in the figure, also when structure 3 is used for a sand arrestation dam or sand arrestation weir, by combining the plurality of blocks 2 to provide structure 3 with a curved shape, structure 3 can divert a natural force such as landslide or mudflow and can direct the diverted force toward a natural object (such as a mountain), thus preventing an artificial object such as a house from being destroyed by the natural force.

Fig. 11 shows an example in which structure 3 is used for an embankment for a river. In the shown example, the plurality of blocks 2 are combined to provide structure 3 with the form of an arc of a fan when viewed in a plan so as to correspond to a curved portion of the river. Thus, at the curved portion of the river, structure 3 can divert a force (natural force) of flow of the river and can direct the diverted force toward a natural object (for example, the center of the river). This makes it possible to prevent an artificial object or structure 3 on the riverside from being destroyed by the natural force.

It should be noted that when it is difficult to transport blocks 2 due to the huge sizes of blocks 2, solid matters 1 are transported to a site for installation and are each sealed in the cement material using a movable plant prepared at the site so as to form blocks 2. By combining the plurality of blocks 2 at the site to assemble structure 3, structure 3 can be constructed even when it is difficult to transport blocks 2 to the site.

As described above, according to the first embodiment, since block 2 is formed using waste 100, the manufacturing cost of block 2 can be reduced. Therefore, by using block 2, the expense required to construct structure 3 can be reduced. In particular, since the present invention relates to constructing a natural disaster prevention structure, the reduced expense in constructing the natural disaster prevention structure promotes deployment of operations for disaster countermeasures, thereby helping to protect lives and environment. Further, since block 2 includes waste 100, a large amount of waste caused daily can be effectively used for construction of the structure and for countermeasures against disaster.

Further, according to the first embodiment, solid matter 1 is coated with cement material 101, and coated solid matter 1 is sealed in cement material 101, whereby solid matter 1 is double-protected by cement materials 101. Therefore, block 2 is excellent in terms of environment. For example, when damage such as cracking is caused in cement material 101 having solid matter 1 sealed therein, solid matter 1 is prevented from being collapsed or flowing to outside because solid matter 1 is coated. Further, when one or a plurality of solid matters 1 each coated with cement material 101 and each tied by a belt are sealed in cement material 101 as required, the one or plurality of solid matters 1 can be more securely prevented from being collapsed or flowing to outside.

Further, by forming solid matter 1 in which the mixture of waste 100 and the cement material is solidified by hardening the cement material, solid matter 1 can be securely prevented from being collapsed or flowing to outside. That is, by mixing waste 100 with the cement material and hardening the cement material in the mixture to form solid matter 1 solidified in a predetermined shape, waste 100 can be firmly integrated with the hardened cement material and solid matter 100 can be reinforced. Therefore, part of waste 100 can be more effectively suppressed from being readily collapsed from solid matter 1 and flowing to outside.

Here, PTL 3 (Japanese Patent Laying-Open No. 2013-150957) describes a method of manufacturing a block, wherein a plurality of wastes are compressed using a press to form a waste block, the waste block is then constrained in a compressed state by a constraining member, a surface of the waste block compressed by the constraining member is then covered with a water-impermeable material, the waste block covered with the water-impermeable material is placed inside a formwork, and a solidifying material such as cement milk is introduced into the formwork to form a solidified body in which the surface of the waste block is covered with the solidifying material having a predetermined thickness. In PTL 3, when covering the surface of the waste block with the water-impermeable material, a surface of each waste of the waste block is coated with an insolubilizer such as cement milk in the following manner: the insolubilizer is introduced into the water-impermeable material to impregnate the waste block with the insolubilizer.

In PTL 3, the surface of the waste block is covered with the water-impermeable material and no coating of a cement material is formed on the surface of the waste block. Therefore, in PTL 3, the waste block is double-protected by the water-impermeable material and the solidifying material; however, the water-impermeable material is weak in strength because the water-impermeable material is a synthetic-rubber-based sheet or a synthetic-resin-based sheet. When damage such as cracking is caused in the solidifying material having the waste block sealed therein, the water-impermeable material is highly likely to be damaged, i.e., is highly likely to be broken or have a hole formed therein. Therefore, unlike the first embodiment, the waste block may be collapsed or may flow to outside in PTL 3.

It should be noted that in PTL 3, the waste block is impregnated with the insolubilizer such as cement milk by introducing the insolubilizer into the water-impermeable material after the waste block is formed by compressing the plurality of wastes. Here, the expression "impregnation" means that a chemical is pushed into a cavity or space and is hardened to fill the cavity or space, or that a liquid or the like is provided to a space in a solid. That is, the expression "impregnation" means that the insolubilizer is provided in the waste block, rather than meaning that the surface of the waste block is covered with the insolubilizer. Thus, in PTL 3, since the waste block is impregnated with the insolubilizer, the surface of the waste block is covered with the water-impermeable material as is apparent from paragraphs 0034 and 0053 of PTL 3. The surface of the waste block is not coated with the insolubilizer. This is also apparent from STEP 4 of Fig. 1 as well as Fig. 4 of PTL 3. The insolubilizer in the water-impermeable material is included in the waste block, and no layer of hardened insolubilizer is present between the waste block and the water-impermeable material. Moreover, PTL 3 does not describe at all that the surface of the waste block is coated with the insolubilizer. Hence, in PTL 3, the surface of the waste block is covered with the water-impermeable material and no coating of cement material is formed on the surface of the waste block.

Further, in the first embodiment, in solid matter 1, waste 100 is mixed with the cement material and is solidified in the predetermined shape by hardening the cement material. Hence, waste 100 is firmly integrated with the hardened cement material and solid matter 1 is reinforced. Therefore, part of waste 100 can be more effectively suppressed from being readily collapsed from solid matter 1 and flowing to outside. In contrast, in PTL 3, the waste block is impregnated with the insolubilizer and the impregnation means that the insolubilizer is merely included in the waste block. On the other hand, in the first embodiment, waste 100 is mixed with the cement material homogeneously rather than being impregnated therewith, waste 100 is firmly integrated with the hardened cement material and solid matter 1 is reinforced. Since the waste block is impregnated with the insolubilizer and the surface of the waste block is covered with the water-impermeable material in PTL 3, a design change to coat the surface of the waste block with the cement material is not motivated unless given a certain suggestion.

As described above, the first embodiment could not have been readily conceived with reference to PTL 3.

Further, according to the first embodiment, at least one set of protrusion 26 and recess 27 each in the form of an elongated line are provided only at front and rear side surfaces 20, 21 of the outer surface of block 2 and at least one set of protrusion 26 and recess 27 each in the form of an elongated line are provided only at left and right side surfaces 22, 23 of the outer surface of block 2 so as to extend across the respective entire heights of the side surfaces. Hence, when coupling a yet-to-be-installed block 2 to installed blocks 2 as shown in Fig. 8, by simply lowering yet-to-be-installed block 2 from above, protrusions 26 and recesses 27 of yet-to-be-installed block 2 can be readily engaged with recesses 27 and protrusions 26 of installed blocks 2 adjacent in the frontward/rearward and leftward/rightward directions, thus enabling coupling of the blocks only by engaging one block 2 with the other blocks 2 from above without moving block 2 laterally. Therefore, blocks 2 can be readily coupled.

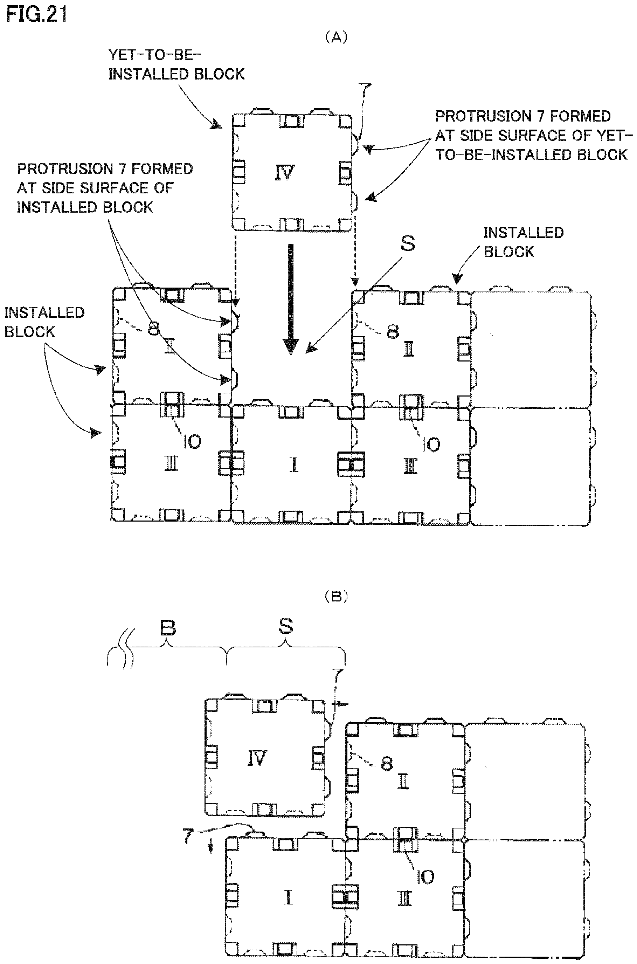

On the other hand, PTL 4 (Japanese Utility Model Laying-Open No. 05-010535) discloses a block in which protrusions and recesses are provided at the front and rear surfaces, left and right surfaces, and upper and lower surfaces of the block, i.e., all the surfaces of the outer surface of the block. Each of the protrusions and recesses in the block of PTL 4 is in the form of a point and is provided at a central position between a central point of a corresponding surface of the outer surface of the block and each apex thereof. The block of PTL 4 does not have a configuration in which the protrusions and recesses each in the form of an elongated line are provided only at the front and rear side surfaces and the left and right side surfaces and are not provided at the upper and lower end surfaces as in the first embodiment. Hence, the block of PTL 4 has the following problem. That is, in PTL 4, when an installation space S for a yet-to-be-installed block is surrounded by installed blocks as shown in Fig. 21 (A), the yet-to-be-installed block cannot be installed in installation space S only by lowering the yet-to-be-installed block. This is due to the following reason: when the yet-to-be-installed block is lowered from above installation space S, a protrusion 7 formed at a side surface of the yet-to-be-installed block collides with an installed block or a protrusion 7 formed at a side surface of an installed block collides with the yet-to-be-installed block. Therefore, in PTL 4, in order to install a yet-to-be-installed block in installation space S, it is necessary to secure an additional space B lateral to installation space S and move the block laterally from space B toward installation space S as shown in Fig. 21 (B). Hence, blocks cannot be coupled readily. On the other hand, in the first embodiment, a yet-to-be-installed block 2 can be coupled to an installed block 2 only by lowering yet-to-be-installed block 2 from above as described above. Hence, the blocks can be coupled apparently readily as compared with PTL 4. This leads to significant reduction of workload in view of such a fact that concrete blocks are very heavy in weight.

Thus, the first embodiment has a significant effect due to the different configuration in protrusions and recesses than that in the block of PTL 4. Referring to paragraph 0005 of PTL 4, it is an object of the invention of PTL 4 to provide a concrete block by which when stacking blocks, displacement or collapse is avoided due to large coupling strength therebetween. Referring to paragraph 0008, in order to achieve the object, protrusions and recesses are provided at the front and rear surfaces, the left and right surfaces, and the upper and lower surfaces of the concrete block so as to allow the concrete block to be coupled in any three-dimensional direction. Thus, in PTL 4, in order to achieve the object to increase the coupling strength between the blocks so as to avoid displacement or collapse, protrusions and recesses are provided at the front and rear surfaces, the left and right surfaces, and the upper and lower surfaces of the concrete block so as to couple the block in any three-dimensional direction. Thus, it is essential to provide protrusions and recesses at the upper and lower surfaces of the block. Providing no protrusions and recesses at the upper and lower surfaces of the block is therefore hindered in PTL 4 because this is contradictory to the object to be achieved by PTL 4. In PTL 4, a design change to provide no protrusions and recesses at the upper and lower surfaces of the block as in the first embodiment cannot be made.

Further, referring to paragraph 0026 of PTL 4, it is described that since the protrusion and recess are provided at each of the pair of front and rear surfaces, the pair of left and right surfaces, and the pair of upper and lower surfaces of the block, it is not necessary to take an orientation of the block into consideration when combining the block with adjacent blocks, and the blocks can be combined at arbitrary surfaces only in consideration that the protrusions correspond to the recesses, thus making a block stacking operation extremely easy. In other words, in order to achieve the easiness of installation, which is the object to be achieved by PTL 4 (see paragraph 0005), the protrusions and recesses are provided at the front and rear surfaces, left and right surfaces, and upper and lower surfaces of the block; however, the easiness of installation is achieved by not only the above configuration but also such a configuration that each of the protrusions and recesses is in the form of a point and is provided at a central position between the central point of a corresponding surface and each apex thereof. If each of the protrusions and recesses of the block of PTL 4 is in the form of a line extending across the entire height of a corresponding surface as in the first embodiment, when combining the block with adjacent blocks, it is necessary to take an orientation of the block into consideration as to whether to direct the block in the vertical orientation or horizontal orientation, i.e., whether to direct the protrusions and recesses at the front, rear, left, right sides in the vertical direction or the horizontal direction, with the result that the blocks cannot be combined at arbitrary surfaces. Therefore, even though PTL 5 (Japanese Patent Laying-Open No. 2013-136910) describes that protrusions and recesses are provided at surfaces of the block so as to extend across the respective entire heights of the surfaces of the block, providing protrusions and recesses to extend across the respective entire heights of surfaces of the block is hindered in PTL 4 because this is contradictory to the object to be achieved by PTL 4. Therefore, a design change to provide the protrusions and the recesses to extend across the respective entire heights of the surfaces of the block as in the first embodiment cannot be made in PTL 4.

As described above, the first embodiment could not have been readily conceived with reference to PTL 4 and PTL 5.

It should be noted that in the first embodiment, blocks 2, 2 adjacent in the frontward/rearward direction, the leftward/rightward direction, or the upward/downward direction may be fixedly connected by a steel member such that collapse is less likely to occur in structure 3. In this case, it is necessary to provide block 2 with a through hole in which the steel member is to be inserted. It is preferable to form the through hole so as not to extend through solid matter 1. In this way, solid matter 1 can be prevented from flowing out of the through hole.

Next, the second embodiment will be described. Hereinafter, differences from the first embodiment will be described. Configurations common to those of the first embodiment will be denoted by the same reference characters as those in the first embodiment, and will not be described in detail.

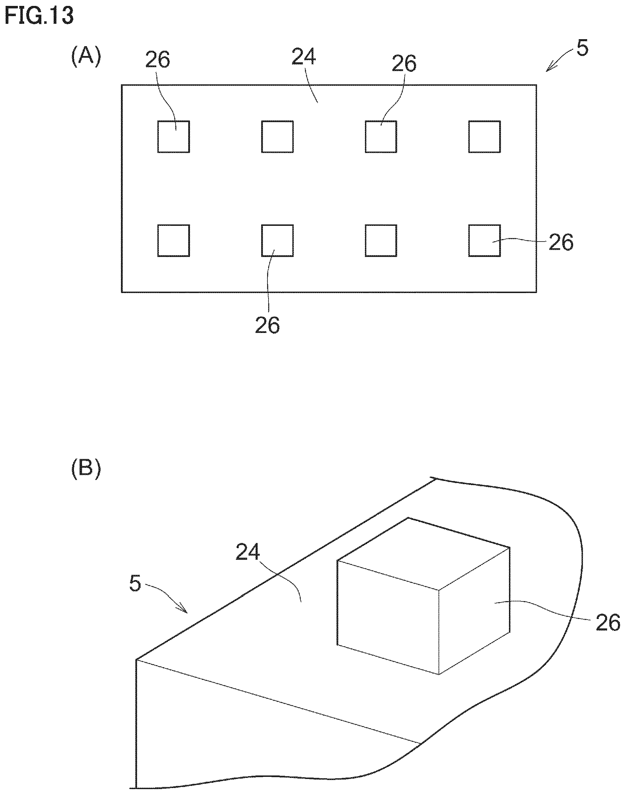

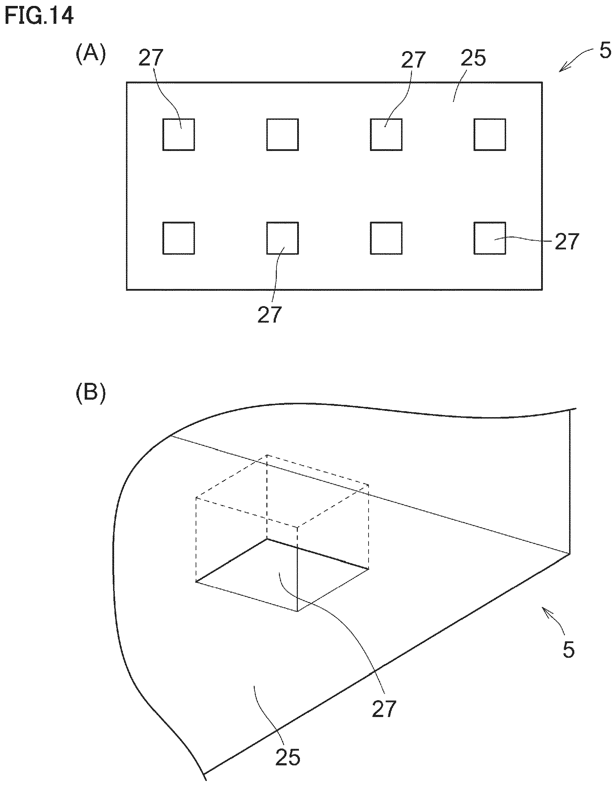

Each of Figs. 12 to 14 shows a block 5 according to the second embodiment. Fig. 12 is a perspective view of block 5, Fig. 13 (A) is a plan view of block 5, and Fig. 13 (B) is an enlarged perspective view of a portion of an upper end surface 24 of block 5. Fig. 14 (A) is a bottom view of block 5, and Fig. 14 (B) is an enlarged perspective view showing a portion of a lower end surface 25 of block 5.

As with block 2 according to the first embodiment, block 5 according to the second embodiment is also manufactured by performing the solid matter forming step, the coating step, and the block forming step shown in Fig. 1. Thus, a feature of block 5 according to the second embodiment also lies in that solid matter 1 including waste 100 is coated with a cement material and one or a plurality of such coated solid matters 1 are sealed in a cement material. Therefore, also in block 5 according to the second embodiment, solid matter(s) 1 are double-protected by the cement materials (in Fig. 12, solid matter(s) 1 provided in block 5 are not shown).

As with block 2 of the first embodiment, in block 5 according to the second embodiment, solid matter 1 to be sealed may be obtained by solidifying waste 100 through compressing, or may be obtained by solidifying the mixture of waste 100 (including the compressed waste) and the cement material by hardening the cement material.

Further, also in block 5 according to the second embodiment, solid matter 1 coated with the cement material may be tied by a belt or solid matter 1 tied by a belt may be coated with the cement material. It should be noted that for the coating with the cement material, in the coating step, the cement material can be attached on solid matter 1 by immersing solid matter 1 in the cement material stored in bath 120 for a predetermined time, by spraying the cement material onto solid matter 1, or by pouring the cement material onto the surface of solid matter 1.

Further, also in block 5 according to the second embodiment, in the block forming step, the cement material is poured with a plurality of iron bars being disposed in formwork 112, with the result that the plurality of iron bars can be disposed in block 5.

Block 5 according to the second embodiment is in the form of a rectangular parallelepiped. At least one protrusion 26 and at least one recess 27 are respectively provided only at upper and lower end surfaces 24, 25 of the outer surface of block 5. No protrusions 26 and recesses 27 are provided at the front, rear, left, and right side surfaces 20 to 23.

In the second embodiment, blocks 5 adjacent in the upward/downward direction are coupled by engagement between protrusion 26 and recess 27 (in each block 5, a protrusion 26 and a recess 27 are formed at positions at which a recess 27 and a protrusion 26 of the other block 5 adjacent in the upward/downward direction can be engaged therewith).

In the second embodiment, the formwork used in the block forming step (see Fig. 1) can have a first protuberance and a second protuberance only at two facing side surfaces. The first protuberance protrudes outward and the second protuberance protrudes inward. Solid matter 1 is placed in formwork 112 and cement material 101 is poured into formwork 112 and is hardened, thereby forming block 5 in which protrusion 26 and recess 27 are provided only at upper end surface 24 and lower end surface 25.

It should be noted that in the example shown in Figs. 12 to 14, eight protrusions 26 are provided at upper end surface 24 of block 2, and eight recesses 27 are provided at lower end surface 25 of block 2. Each of the respective numbers of protrusions 26 and recesses 27 may be a number other than eight. Both protrusions 26 and recesses 27 may be provided at each of upper and lower end surfaces 24, 25.

The outer shape of block 7 is not limited to the rectangular parallelepiped (hexahedron), and may be, for example, a cube (hexahedron) or a prism, but is preferably the rectangular parallelepiped. In the second embodiment, block 5 is in the form of a rectangular parallelepiped in which longer width 5a of block 5 is an integer multiple of shorter width 5b of block 5 with the integer multiple being more than or equal to 2. Each of Figs. 12 to 14 shows a case where longer width 5a is twice as large as shorter width 5b. It should be noted that the integer value of longer width 5a/shorter width 5b is appropriately adjusted for each site for installation. For example, longer width 5a can be three times or four times as large as shorter width 5b. Height 5c of block 5 can be adjusted to an appropriate value for each site for installation (i.e., height 5c of block 5 may differ for each site). It should be noted that in each site, heights 5c of blocks 5 are preferably uniform.

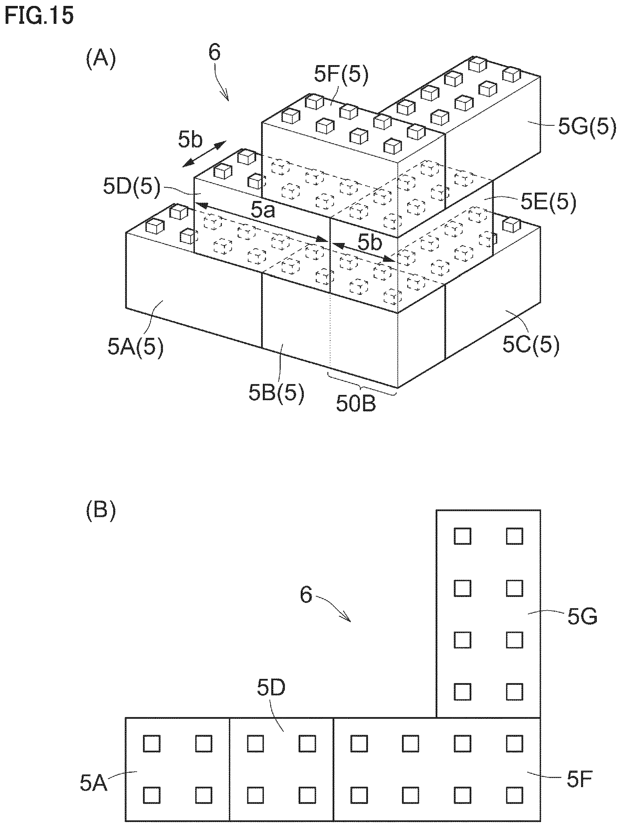

Fig. 15 shows a structure 6 assembled using blocks 5 according to the second embodiment. Fig. 15 (A) is a perspective view thereof and Fig. 15 (B) is a plan view thereof.

Structure 6 according to the second embodiment is mainly used as a structure for sea or river, but may be used as a structure for land. In structure 6, an upper first block 5 is disposed on and over a plurality of lower blocks 5 disposed side by side and adjacent in the frontward/rearward direction or the leftward/rightward direction (hereinafter, simply referred to as "the plurality of lower blocks 5"). Thus, entire longer width 5a and/or entire shorter width 5b of upper first block 5 are supported by the plurality of lower blocks 5. For example, entire longer width 5a and entire shorter width 5b of a block 5D (first block 5) are supported by blocks 5A, 5B (the plurality of lower blocks 5, 5).

Protrusions 26 or recesses 27 provided at upper end surfaces 24 of the plurality of lower blocks 5 are engaged with recesses 27 or protrusions 26 provided at lower end surface 25 of upper first block 5 to couple the plurality of lower blocks 5 and upper first block 5. For example, blocks 5A, 5B (the plurality of lower blocks 5) and block 5D (first block 5) are coupled.

Further, an upper third block 5 is laid on a projection portion 50 of a lower second block 5 projecting outward with respect to upper first block 5. Thus, entire longer width 5a or entire shorter width 5b of third block 5 is supported by second block 5 with first block 5 and third block 5 being adjacent in the frontward/rearward direction or the leftward/rightward direction. For example, by lying a block 5E (third block 5) on a projection portion 50B of block 5B (second block 5) projecting outward with respect to block 5D (first block 5), entire shorter width 5b of block 5E is supported by block 5B with block 5D and block 5E being adjacent in the leftward/rightward direction.

It should be noted that the size of "projection portion 50 of second block 5" is determined in accordance with the value of longer width 5a/shorter width 5b. In the example shown in Fig. 15, since longer width 5a is twice as large as shorter width 5b, "projection portion 50 of second block 5" has a range that is 1/2 (half) of longer width 5a of second block 5. It should be noted that for example, when longer width 5a is three times as large as shorter width 5b, the "projection portion of second block 5" has a size that is 1/3 or 2/3 of the size of second block 5.

Protrusions 26 or recesses 27 provided at upper end surface 24 of projection portion 50 of lower second block 5 are engaged with recesses 27 or protrusions 26 provided at lower end surface 25 of upper third block 5. Thus, as with upper first block 5, upper third block 5 is coupled to lower second block 5. For example, as with block 5D (first block 5), block 5E (third block 5) is coupled to block 5B (second block 5).

By coupling blocks 5 as described above, the plurality of blocks 5 included in structure 6 are coupled without positional displacement in any of the frontward/rearward direction, the leftward/rightward direction, and the upward/downward direction. No space is interposed between blocks 5 adjacent in the frontward/rearward direction, the leftward/rightward direction, and the upward/downward direction, and entire longer width 5a and/or entire shorter width 5b of each block 5 are supported by lower blocks 5.

Further, in the second embodiment, upper blocks 5, 5 adjacent and perpendicular to each other are laid on lower blocks 5, 5 adjacent and perpendicular to each other, thereby forming a bent portion in structure 6. In the example shown in Fig. 15, blocks 5D, 5E adjacent and perpendicular to each other are laid on blocks 5B, 5C adjacent and perpendicular to each other, and blocks 5F, 5G adjacent and perpendicular to each other are laid on blocks 5D, 5E, thereby forming a bent portion.

By forming, for example, a plurality of such bent portions in structure 6, structure 6 can have a curved shape (i.e., structure 6 can be constructed to have a curved shape formed by the plurality of bent portions). When structure 6 has such a curved shape as described above, structure 6 can divert a natural force (such as a force of rough wave) and can direct the diverted force toward a natural object (such as a mountain).

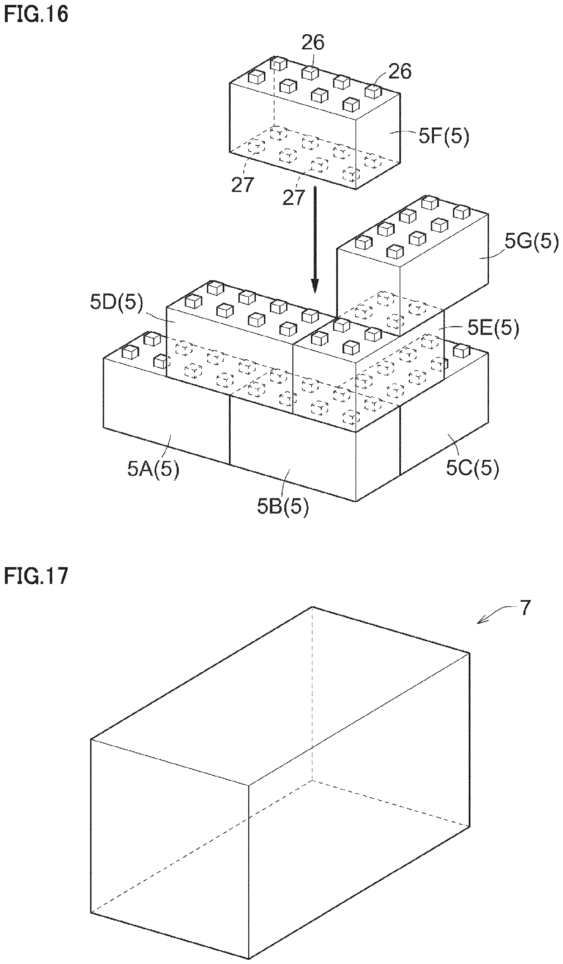

In structure 6 according to the second embodiment, no protrusions 26 and recesses 27 are provided at the side surfaces of block 5. Hence, blocks 5, 5 can be coupled by engaging one block with the other blocks from above. That is, as shown in Fig. 16, by lowering a block 5, protrusions 26 or recesses 27 of block 5 can be engaged with recesses 27 or protrusions 26 of other blocks 5 to be located below and adjacent to foregoing block 5. Block 5 does not need to be moved laterally. Therefore, blocks 5, 5 adjacent in the upward/downward direction can be readily coupled. It should be noted that in order to facilitate engagement of a block 5 from above, the lateral cross section of each recess 27 is preferably larger than the lateral cross section of a corresponding protrusion 26.

It should be noted that in the second embodiment, longer width 5a of block 5 does not necessarily need to be an integer multiple of shorter width 5b of block 5 with the integer multiple being more than or equal to 2. Longer widths 5a and shorter widths 5b of blocks 5 may not be uniform. Even in this case, by disposing an upper first block 5 on and over a plurality of lower blocks 5, the plurality of lower blocks 5 and upper first block 5 can be coupled by engagement between recesses 27 and protrusions 26. It should be noted that when longer width 5a of block 5 is an integer multiple of shorter width 5b with the integer multiple being more than or equal to 2, no space is interposed between blocks 5 adjacent in the frontward/rearward direction, the leftward/rightward direction, and the upward/downward direction, and entire longer width 5a and entire shorter width 5b of each block 5 can be supported by lower blocks 5. It should be noted that in order to couple one upper block 5 to a plurality of lower blocks 5 as described above, a plurality of protrusions 26 and a plurality of recesses 27 need to be provided at upper and lower end surfaces 24, 25 of each block 5.

Further, in the second embodiment, upper first block 5 does not necessarily need to be disposed on and over the plurality of lower blocks 5. For example, one upper block 5 may be disposed on one lower block 5, and one lower block 5 and one upper block 5 may be coupled by engagement between a recess 27 and a protrusion 26.

Also in the second embodiment, as with the first embodiment, when it is difficult to transport blocks 5, solid matters 1 may be transported to a site for installation, and may be each sealed in the cement material using a movable plant prepared at the site so as to form blocks 2, and then a plurality of such blocks 5 may be combined at the site to assemble a structure 6.

The plurality of blocks 5 included in structure 6 (Fig. 15) according to the second embodiment may be coupled by not only the coupling between protrusions 26 and recesses 27 but also an adhesive agent such as mortar.

Further, blocks 5, 5 adjacent in the frontward/rearward direction, the leftward/rightward direction, or the upward/downward direction may be fixedly connected by a steel member such that collapse is less likely to occur in structure 6. In this case, it is preferable to form a through hole in each block 5 for insertion of the steel member so as not to extend through solid matter 1. In this way, solid matter 1 can be prevented from flowing out of the through hole.

It should be noted that since structure 6 is used for a natural disaster prevention structure, a foundation block, a block for a surface of slope, or a sill, each one block 2 in structure 6 has to be large and heavy in weight. Further, blocks 5, 5 have to be coupled to endure a large force applied during disaster or the like.

As described above, according to the second embodiment, since block 5 is formed using waste 100, the same effect as that of the first embodiment can be exhibited.

Further, according to the second embodiment, since solid matter 1 is double-protected by the cement materials, the same effect as that of the first embodiment can be exhibited.

Further, according to the second embodiment, protrusions 26 and recesses 27 are provided only at upper and lower end surfaces 24, 25 of the outer surface of block 5 and no protrusions and recesses are provided at the front, rear, left and right side surfaces 20 to 23. Hence, when coupling a yet-to-be-installed block 5 to installed blocks 5 as shown in Fig. 16, by simply lowering yet-to-be-installed block 5 from above, protrusions 26 or recesses 27 provided at lower end surface 25 of yet-to-be-installed block 5 can be readily engaged with recesses 27 or protrusions 26 provided at upper end surfaces 24 of installed blocks 5 to be located below and adjacent thereto. Blocks 5 can be coupled only by engagement from above without moving block 5 laterally. Therefore, blocks 5 can be readily coupled.

Further, according to the second embodiment, since block 5 is in the form of a rectangular parallelepiped in which longer width 5a of block 5 is an integer multiple of shorter width 5b of block 5 with the integer multiple being more than or equal to 2, a plurality of blocks 5 can be combined and coupled as shown in Fig. 15. Specifically, an upper first block 5 is disposed on and over a plurality of lower blocks 5 disposed adjacent in the frontward/rearward direction or the leftward/rightward direction. Thus, entire longer width 5a and/or entire shorter width 5b of upper first block 5 can be supported by the plurality of lower blocks 5. For example, entire longer width 5a and entire shorter width 5b of block 5D (first block 5) are supported by blocks 5A, 5B (the plurality of lower blocks 5, 5). Further, by lying upper third block 5 on projection portion 50 of lower second block 5 projecting outward with respect to upper first block 5, entire longer width 5a or entire shorter width 5b of third block 5 is supported by second block 5 with first block 5 and third block 5 being adjacent in the frontward/rearward direction or the leftward/rightward direction. For example, by lying block 5E (third block 5) on projection portion 50B of block 5B (second block 5) projecting outward with respect to block 5D (first block 5), entire shorter width 5b of block 5E is supported by block 5B with block 5D and block 5E being adjacent in the leftward/rightward direction. By coupling blocks 5 as described above, block structure 6 can be constructed which have front, rear, left, and right side surfaces extending vertically. Moreover, the plurality of blocks 5 in block structure 6 can be coupled without positional displacement in any of the frontward/rearward direction, leftward/rightward direction, and upward/downward direction. No space is interposed between blocks 5 adjacent in the frontward/rearward direction, leftward/rightward direction, and upward/downward direction, and entire longer width 5a and entire shorter width 5b of each block 5 can be supported by lower blocks 5.

On the other hand, PTL 4 discloses a block in which protrusions and recesses are provided at the front and rear surfaces, the left and right surfaces, and the upper and lower surfaces of the block, i.e., all the surfaces of the outer surface of the block. The block of PTL 4 is in the form of a cube. Each of the protrusions and recesses in the block of PTL 4 is in the form of a point and is provided at a central position between a central point of a corresponding surface of the outer surface of the block and each apex thereof. The block of PTL 4 does not have a configuration in which the protrusions and the recesses are provided only at the upper and lower end surfaces as in the second embodiment. Hence, the block of PTL 4 has the following problem. That is, in PTL 4, when an installation space S for a yet-to-be-installed block is surrounded by installed blocks as shown in Fig. 21 (A), the yet-to-be-installed block cannot be installed in installation space S only by lowering the yet-to-be-installed block. This is due to the following reason: when the yet-to-be-installed block is lowered from above installation space S, a protrusion 7 formed at a side surface of the yet-to-be-installed block collides with an installed block or a protrusion 7 formed at a side surface of an installed block collides with the yet-to-be-installed block. Therefore, in PTL 4, in order to install a yet-to-be-installed block in installation space S, it is necessary to secure an additional space B lateral to installation space S and move the block laterally from space B toward installation space S as shown in Fig. 21 (B). Hence, blocks cannot be coupled readily. On the other hand, in the second embodiment, since a yet-to-be-installed block 5 can be coupled to installed blocks 5 only by lowering yet-to-be-installed block 5 from above as described above, the blocks can be coupled apparently readily as compared with PTL 4. This leads to significant reduction of workload in view of such a fact that concrete blocks are very heavy in weight.

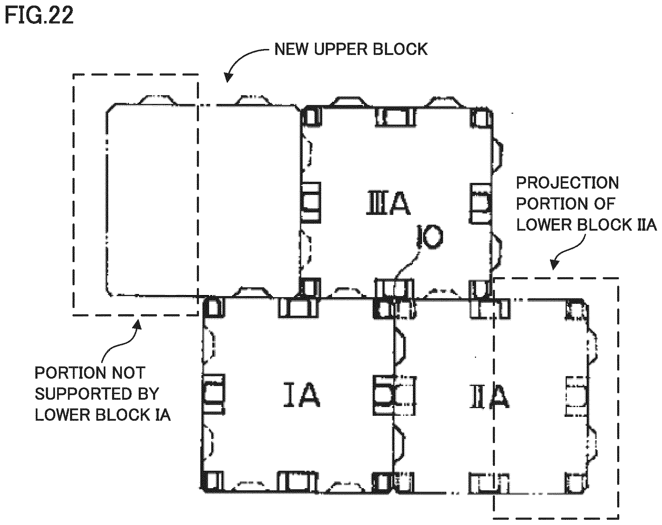

In addition, in PTL 4, each block is in the form of a cube. Hence, when an upper block IIIA is disposed on and over a plurality of lower blocks IA, IIA disposed side by side and adjacent in the frontward/rearward direction or the leftward/rightward direction as shown in Fig. 22, a portion of lower block IIA projects outward with respect to upper block IIIA. When an upper block is newly laid on a projection portion of lower block IA projecting outward with respect to upper block IIIA, a portion of the block is supported by lower block IA but the other portion thereof is not supported by the lower block. Thus, in the case where each block is in the form of a cube, when upper block IIIA is disposed on and over the plurality of lower blocks IA, IIA, a portion of lower block IIA projects or a portion of the upper block is not supported by the lower block. Hence, it is impossible to construct a block structure in which an upper block is entirely supported by lower blocks and which has front, rear, left, and right side surfaces each extending vertically. On the other hand, in the second embodiment, when an upper block is disposed on and over a plurality of lower blocks as described above, it is possible to construct a block structure which has front, rear, left, and right side surfaces extending vertically. The plurality of blocks included in the block structure can be coupled without positional displacement in any of the frontward/rearward direction, leftward/rightward direction, and upward/downward direction. No space is interposed between the blocks adjacent in the frontward/rearward direction, leftward/rightward direction, and upward/downward direction, and each block can be entirely supported by lower blocks.

Thus, the second embodiment has a significant effect due to the different configuration in protrusions and recesses than that in the block of PTL 4. Referring to paragraph 0005 of PTL 4, it is an object of the invention of PTL 4 to provide a concrete block by which when stacking blocks, displacement or collapse is avoided due to large coupling strength therebetween. Referring to paragraph 0008, in order to achieve the object, protrusions and recesses are provided at the front and rear surfaces, the left and right surfaces, and the upper and lower surfaces of the concrete block so as to allow the concrete block to be coupled in any three-dimensional direction. Thus, in PTL 4, in order to achieve the object to increase the coupling strength between blocks so as to avoid displacement or collapse, protrusions and recesses are provided at the front and rear surfaces, the left and right surfaces, and the upper and lower surfaces of the concrete block so as to couple the block in any three-dimensional direction. Thus, it is essential to provide protrusions and recesses at not only the upper and lower surfaces but also the front and rear surfaces and the left and right surfaces of the concrete block. Providing protrusions and recesses only at the upper and lower surfaces of the block without providing protrusions and recesses at the front, rear, left and right side surfaces is therefore hindered in PTL 4 because this is contradictory to the object to be achieved by PTL 4. In PTL 4, a design change to provide no protrusions and recesses at the upper and lower surfaces of the block as in the second embodiment cannot be made.

In addition, referring to paragraph 0005 of PTL 4, it is described to provide a concrete block that employs a cubic shape, which is basically simple as a waste-containing concrete block, that is manufactured and installed readily, and that allows for large coupling strength between stacked blocks to avoid displacement and collapse. Further, referring to paragraph 0026 of PTL 4, it is described that since the protrusion and recess are provided at each of the pair of front and rear surfaces, the pair of left and right surfaces, and the pair of upper and lower surfaces of a block, it is not necessary to take an orientation of the block into consideration when combining the block with adjacent blocks, and the blocks can be combined at arbitrary surfaces only in consideration that the protrusions correspond to the recesses, thus making a block stacking operation extremely easy. In other words, in order to achieve the easiness of installation, which is the object to be achieved by PTL 4 (see paragraph 0005), the protrusions and recesses are provided at the front and rear surfaces, left and right surfaces, and upper and lower surfaces of the block; however, the easiness of installation is achieved by not only the above configuration but also such a configuration that the block is in the form of a cube such that the block is basically the same in whatever direction the block is oriented and each of the protrusions and recesses is in the form of a point and is provided at a central position between the central point of a corresponding surface and each apex thereof. Thus, in PTL 4, the block is in the form of a cube in order to realize the easiness of manufacturing and installation. In PTL 4, if the block is in the form of a rectangular parallelepiped in which the longer width of the block is an integer multiple of the shorter width of the block with the integer multiple being more than or equal to 2 as in the second embodiment, the block is not manufactured readily. Moreover, when combining the block with adjacent blocks, it is necessary to take an orientation of the block into consideration as to whether to direct the block in the vertical orientation or horizontal orientation, with the result that the blocks cannot be combined at arbitrary surfaces. Therefore, providing the block in the form of a rectangular parallelepiped is hindered in PTL 4 because this is contradictory to the object to be achieved by PTL 4. Therefore, a design change to provide the block in the form of a rectangular parallelepiped in which the longer width of the block is an integer multiple of the shorter width of the block with the integer multiple being more than or equal to 2 as in the second embodiment cannot be made in PTL 4.

As described above, the second embodiment could not have been readily conceived with reference to PTL 4.

Next, the third embodiment will be described. Hereinafter, differences from the first embodiment will be described. Components common to the first embodiment will be denoted by the same reference characters as those in the first embodiment, and will not be described in detail.

Fig. 17 is a perspective view showing a block 7 according to the third embodiment.

As with block 2 according to the first embodiment, block 7 according to the third embodiment is also manufactured by performing the solid matter forming step, the coating step, and the block forming step shown in Fig. 1. Thus, a feature of block 7 according to the third embodiment also lies in that one or a plurality of solid matters 1 each including waste 100 are coated with a cement material and the one or plurality of coated solid matters 1 are sealed in a cement material. Therefore, also in block 7 according to the third embodiment, each of the one or plurality of solid matters 1 is double-protected by the cement materials (in Fig. 17, each of the one or plurality of solid matters 1 provided in block 7 is not shown).

As with block 2 according to the first embodiment, in block 7 according to the third embodiment, solid matter 1 to be sealed may be obtained by solidifying waste 100 through compressing, or may be obtained by solidifying the mixture of waste 100 (including the compressed waste) and the cement material by hardening the cement material.

Further, also in block 7 according to the third embodiment, solid matter 1 coated with the cement material may be tied by a belt or solid matter 1 tied by a belt may be coated with the cement material. It should be noted that for the coating with the cement material, in the coating step, the cement material can be attached on solid matter 1 by immersing solid matter 1 in the cement material stored in bath 120 for a predetermined time, by spraying the cement material onto solid matter 1, or by pouring the cement material onto the surface of solid matter 1.

Further, also in block 7 according to the third embodiment, in the block forming step, the cement material is poured with a plurality of iron bars being disposed in formwork 112, with the result that the plurality of iron bars can be disposed in block 7.

Block 7 according to the third embodiment is in the form of a rectangular parallelepiped (hexahedron) and no protrusions 26 and recesses 27 are provided at the outer surface of block 7. It should be noted that block 7 according to the third embodiment is not limited to a block in which no protrusions 26 and recesses 27 are provided at the outer surface of the block.

In the third embodiment, a formwork having a flat inner surface can be used in the block forming step (see Fig. 1). By placing solid matter(s) 1 in formwork 112, pouring the cement material into formwork 112 and hardening the cement material, block 7 is formed in which no protrusions 26 and recesses 27 are provided at the outer surface of block 7.

In the third embodiment, a structure is constructed by combining a plurality of such blocks 7. The structure according to the third embodiment is mainly used as a structure for land, but can also be used as a structure for sea or river.

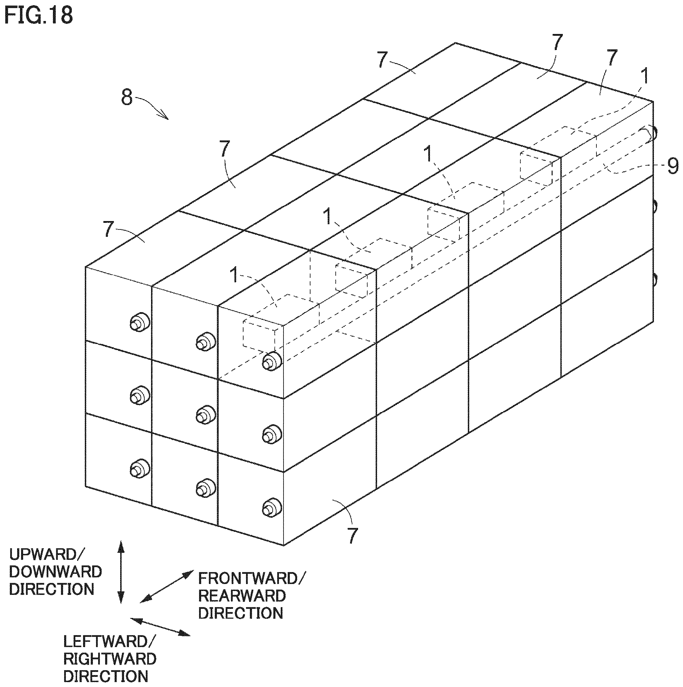

Fig. 18 is a perspective view showing an exemplary structure constructed by combining blocks 7 according to the third embodiment. A structure 8 shown in Fig. 18 is constructed by placing a new block 7 on an installation surface (ground surface) for structure 8 or on an installed block 7. In the example shown in Fig. 18, structure 8 is assembled by disposing a plurality of blocks 7 side by side in the frontward/rearward and leftward/rightward directions and by disposing a plurality of blocks 7 in the form of stacks in the upward/downward direction. As with the other examples, in block 7 of Fig. 18, it is preferable that a solid matter 1 is formed with a waste being compressed in a predetermined shape or is formed with a mixture including a waste and a cement material homogeneously being solidified by hardening the cement material to integrate the waste and the cement material. Further, one or a plurality of such solid matters 1 in each of which the material including the waste is solidified in the predetermined shape are coated with a cement material, and the surface of each of the one or plurality of solid matters 1 is covered with a film composed of the cement material. The one or plurality of solid matters 1 each coated with the cement material are sealed in the cement material to form a block.

Further, in structure 8, the plurality of blocks 7 disposed side by side in the frontward/rearward direction, the leftward/rightward direction, or the upward/downward direction can be fixedly connected using a steel member 9 by providing steel member 9 to extend through the plurality of blocks 7 disposed side by side in the frontward/rearward direction, the leftward/rightward direction, or the upward/downward direction (Fig. 18 shows an example in which four blocks 7 disposed in the frontward/rearward direction are fixedly connected by a steel member 9). In this way, collapse can be less likely to occur in structure 8. It should be noted that by fixedly connecting blocks 7 using steel members 9 in all of the frontward/rearward direction, leftward/rightward direction, and upward/downward direction, all the blocks 7 included in structure 8 are coupled in all of the frontward/rearward direction, leftward/rightward direction, and upward/downward direction. In this way, collapse can be prevented securely in structure 8. It should be noted that in order to fixedly connect the plurality of blocks 7 using a steel member 9, it is necessary to form a through hole in each block 7 for insertion of steel member 9; however, it is preferable to form the through hole in each block 7 so as to avoid solid matter 1. In this way, solid matter 1 can be prevented from flowing out of the through hole.

The outer shape of block 7 is not limited to the rectangular parallelepiped (hexahedron), but may be, for example, a cube (hexahedron). It should be noted that when block 7 is in the form of a rectangular parallelepiped, the longer width of block 7 is, for example, an integer multiple of the shorter width of block 7 with the integer multiple being more than or equal to 2 (for example, the longer width of block 7 is twice as large as the shorter width of block 7). Further, for example, block 7 may be in the form of a trapezoid such that the left side surface and/or the right side surface are not perpendicular to but are inclined with respect to the front side surface and the rear side surface when viewed in a cross section. By constructing structure 8 using such blocks 7 each in the form of a trapezoid when viewed in a cross section, structure 8 can have a curved shape as with structure 3 (Figs. 10 and 11) according to the first embodiment. Thus, structure 6 can divert a natural force (such as a force of rough wave) and can direct the diverted force toward a natural object (such as a mountain).

Fig. 18 shows an example in which blocks 7 are adjacent in the frontward/rearward direction or the leftward/rightward direction with no space being interposed therebetween; however, in structure 8, a space may be interposed between blocks 7 adjacent in the frontward/rearward direction or the leftward/rightward direction. Further, in structure 8, the plurality of blocks 7 does not necessarily need to be disposed in the form of stacks in the upward/downward direction. Structure 8 may be constituted of only one layer of a plurality of blocks 7 disposed side by side in the frontward/rearward and leftward/rightward directions. In Fig. 18, as the member for fixedly connecting blocks 7, pure iron, stainless steel, titanium, or the like, each of which is an applicable metal material other than steel member 9, may be used. Further, in Fig. 18, for example, one steel member 9 extends through all the blocks 7 disposed in the frontward/rearward direction. However, it is not limited to such an example. For example, two adjacent blocks 7 may be fixedly connected by one steel member 9 extending therethrough, and different steel members 9 may be disposed in a discontinuous manner between one block 7 of two adjacent blocks 7 and a block 7 adjacent to one block 7 and between the other block 7 of two adjacent blocks 7 and a block 7 adjacent to the other block 7. Alternatively, for example, three blocks 7 on the front side in the frontward/rearward direction in Fig. 18 may be fixedly connected by a single steel member 9 extending therethrough, and third block 7 from the front and rearmost block 7 adjacent to third block 7 may be fixedly connected by a different steel member 9. Blocks 7 may be fixedly connected by a plurality of steel members 9 having different lengths in the frontward/rearward direction in a single structure 8.

The plurality of blocks 7 included in structure 8 may be coupled by using an adhesive agent such as mortar.

It should be noted that since structure 8 is used for a natural disaster prevention structure, a foundation block, a block for a surface of slope, or a sill, blocks 7, 7 have to be coupled to endure a large force applied during disaster or the like.

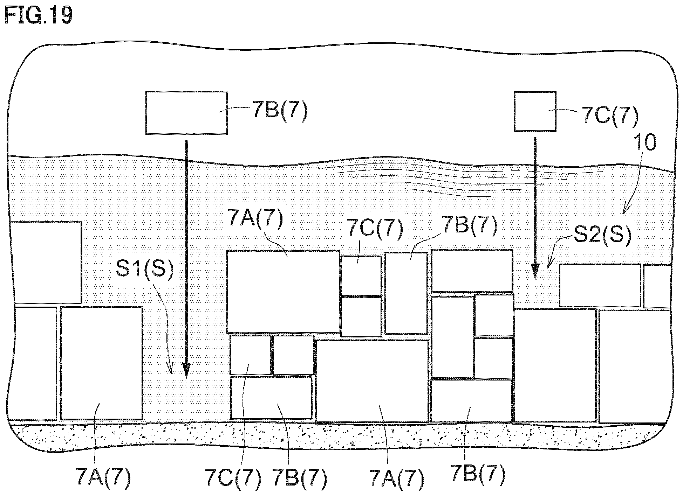

Fig. 19 is a diagram showing another exemplary structure constructed using blocks 7 according to the third embodiment.

A structure 10 shown in Fig. 19 is also constructed by combining a plurality of blocks 7 each provided with no protrusions 26 and no recesses 27. As with the other examples, in each of blocks 7 of Fig. 19, it is preferable that a solid matter 1 is formed with a material including a waste being compressed in a predetermined shape or is formed with a mixture including a waste and a cement material homogeneously being solidified by hardening the cement material to integrate the waste and the cement material. Further, it is preferable that one or a plurality of such solid matters 1 in each of which a material including a waste is solidified in a predetermined shape are coated with a cement material, the surface of each of the one or plurality of solid matters 1 is covered with a film composed of the cement material, and the one or plurality of solid matters 1 each coated with the cement material are sealed in a cement material to form a block. In structure 10, as blocks 7 in combination, a plurality of types of blocks 7A, 7B, 7C having different sizes are used. In a space S between adjacent blocks 7, 7, a block 7 selected from blocks A, 7B, 7C in accordance with the size of space S is installed (Fig. 19 shows an example in which medium-sized block 7B is installed in a space S1 and small-sized block 7C is installed in a space S2). Thus, the plurality of blocks 7 included in structure 10 are densely gathered. The outer shape of each of blocks 7 for constructing structure 10 is not limited to a rectangular parallelepiped (hexahedron), but may be, for example, a cube (hexahedron).

As with structure 8 shown in Fig. 18, structure 10 can be also constructed readily because it is not necessary to engage recesses 27 with protrusions 26. Further, since block 7 to be installed in space S between adjacent blocks 7, 7 is selected in accordance with the size of space S, structure 10 can be constructed even when space S is distorted in shape due to an installed block 7 being inclined by a softened ground surface.

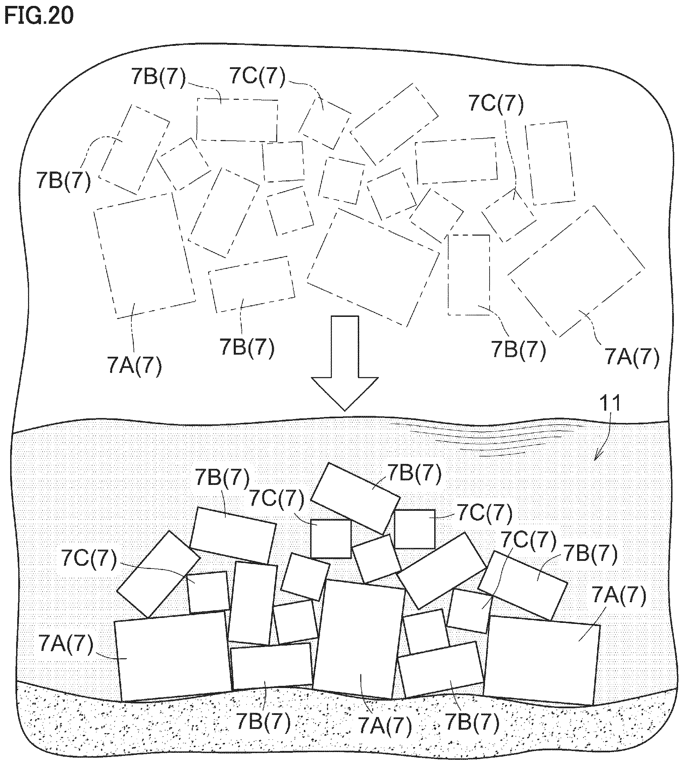

Fig. 20 is a diagram showing another exemplary structure constructed using blocks 7 according to the third embodiment.

A structure 11 shown in Fig. 20 is also constructed by combining a plurality of types of blocks 7A, 7B, 7C having different sizes. The outer shape of each of blocks 7A, 7B, 7C for constructing structure 11 is not limited to a rectangular parallelepiped (hexahedron), but may be, for example, a cube (hexahedron), a cylinder, or a prism.

When constructing structure 11, the plurality of types of blocks 7A, 7B, 7C having different sizes are irregularly stacked by naturally dropping blocks 7A, 7B, 7C onto the installation surface for structure 11. Accordingly, structure 11 is constructed by randomly stacking the plurality of types blocks 7A, 7B, 7C. It should be noted that each of the plurality of types of blocks 7A, 7B, 7C may be provided with a protrusion and a recess at the outer surface thereof as in each of the blocks according to the first and second embodiments. As with the other examples, in each of blocks 7A, 7B, 7C of Fig. 20, it is preferable that a solid matter 1 is formed with a material including a waste being compressed in a predetermined shape or is formed with a mixture including a waste and a cement material homogeneously being solidified by hardening the cement material to integrate the waste and the cement material. Further, it is preferable that one or a plurality of such solid matters 1 in each of which a material including a waste is solidified in a predetermined shape is coated with a cement material, the surface of each of the one or plurality of solid matters 1 is covered with a film composed of the cement material, and the one or plurality of solid matters 1 each coated with the cement material are sealed in a cement material to form a block.

According to the construction method described above, structure 11 is constructed by a simple operation of naturally dropping the plurality of blocks 7 collectively. Therefore, structure 11 can be constructed very quickly and readily. Moreover, since the plurality of types of blocks 7A, 7B, 7C having different sizes are used, a smaller block comes into a space between large blocks, with the result that the plurality of blocks are densely gathered as shown in Fig. 20. Thus, structure 11 in which the plurality of blocks are densely gathered can be constructed by the simple operation. Further, since structure 11 is formed by randomly stacking the plurality of types of blocks 7A, 7B, 7C, a space is present between the blocks as shown in Fig. 20. Here, as shown in Fig. 21, PTL 4 described above discloses a method of constructing a structure by regularly stacking a plurality of blocks having the same size. However, when a structure is constructed by regularly stacking a plurality of blocks, the structure directly receives energy (momentum of flow) of wave or wind, with the result that the structure is likely to be broken. However, when a space is present between blocks as shown in Fig. 20, the energy (momentum of flow) of wave or wind can be reduced and attenuated by the space, with the result that structure 11 can be less likely to be broken. Further, when the installation surface for structure 11 is a river bed, a sea bed, or the like, the installation surface is uneven or softened; however, even in such a case, structure 11 can be constructed on such an installation surface by flexibly following a change in shape of the installation surface, unlike the case where a structure is constructed by regularly stacking a plurality of blocks as shown in Fig. 21.

By randomly stacking the plurality of types of blocks 7A, 7B 7C having different sizes in this way, a more significant effect is exhibited than that in the case where a structure is constructed by regularly stacking a plurality of blocks having the same size. There is no prior document that discloses to construct structure 11 using a plurality of types of blocks having different sizes. In each of PTL 4, PTL 6 (Japanese Patent Laying-Open No. 2013-150957) and PTL 7 (Japanese Patent Laying-Open No. 2015-105468), a structure is constructed by stacking a plurality of blocks having the same size.

In addition, referring to paragraph 0005 of PTL 4, it is described to provide a concrete block that employs a cubic shape, which is basically simple as a waste-containing concrete block, that is manufactured and installed readily, and that allows for large coupling strength between stacked blocks to avoid displacement and collapse. Further, referring to paragraph 0026 of PTL 4, it is described that since the protrusion and recess are provided at each of the pair of front and rear surfaces, the pair of left and right surfaces, and the pair of upper and lower surfaces of a block, it is not necessary to take an orientation of the block into consideration when combining the block with adjacent blocks, and the blocks can be combined at arbitrary surfaces only in consideration that the protrusions correspond to the recesses, thus making a block stacking operation extremely easy. In other words, in order to achieve the easiness of manufacturing, which is the object to be achieved by PTL 4 (see paragraph 0005), each of the blocks is in the form of a cube. Further, in order to achieve the easiness of installation, the blocks are in the forms of cubes having the same size such that the protrusions correspond to the recesses without taking the orientation of each of the blocks into consideration, and each of the protrusions and recesses is provided at a central position between the central point of a corresponding surface and each apex thereof. Thus, in PTL 4, the blocks are in the form of cubes having the same size in order to realize the easiness of manufacturing and the easiness of installation. In PTL 4, however, if the plurality of types of blocks having different sizes are used as shown in Fig. 20, it is difficult to stack the plurality of blocks while engaging the protrusions with the recesses. Therefore, a design change to use a plurality of types blocks having different sizes as shown in Fig. 20 cannot be made in PTL 4.

Further, regarding randomly stacking the blocks in the structure, referring to paragraph 0043 of PTL 7, it is described that wave-dissipating blocks included in a block complex may be disposed in the form of two stacks, or may be disposed in the form of a plurality of stacks, or may be randomly stacked in the upward/downward direction. However, each of the wave-dissipating blocks of PTL 7 has a shape with four legs, rather than a hexahedral shape such as a rectangular parallelepiped or a cube as shown in Fig. 20. Even if it is a well-known technique to construct a structure by randomly stacking a plurality of blocks each having a shape with four legs such as tetrapod (registered trademark), there is no prior document that discloses to construct a structure by randomly stacking a plurality of hexahedron-shaped blocks. In each of PTL 4 and PTL 6 in each of which a structure is constructed using hexahedron-shaped blocks, the structure is constructed by regularly stacking the plurality of blocks. Therefore, even with reference to PTL 4, PTL 6, and PTL 7, it is not a well-known technique to construct a structure by randomly stacking a plurality of hexahedron-shaped blocks. In addition, referring to paragraph 0005 of PTL 4, it is an object of the invention of PTL 4 to provide a concrete block by which when stacking blocks, displacement or collapse is avoided due to large coupling strength therebetween. Referring to paragraph 0008, in order to achieve the object, protrusions and recesses are provided at the front and rear surfaces, the left and right surfaces, and the upper and lower surfaces of the concrete block so as to allow the concrete block to be coupled in any three-dimensional direction. Thus, in PTL 4, in order to achieve the object to increase the coupling strength between the blocks so as to avoid displacement or collapse, protrusions and recesses are provided at the front and rear surfaces, the left and right surfaces, and the upper and lower surfaces of the concrete block to couple the blocks by engagement between the protrusions and the recesses. Constructing a structure by randomly stacking a plurality of blocks is therefore hindered in PTL 4 because this is contradictory to the object of cited reference 1. Therefore, even one having ordinary skill in the art could not have readily attempted to make a design change to hinder the object of PTL 4. In PTL 4, a design change to construct a structure by randomly stacking a plurality of blocks as shown in Fig. 20 cannot be made. Therefore, structure 11 shown in Fig. 20 could not have been readily conceived with reference to PTL 4, PTL 6, and PTL 7.

It should be noted that in order to construct structure 11, the plurality of types of blocks 7A, 7B, 7C may be naturally dropped onto the installation surface for structure 11 in the order from largest-sized block 7 (blocks 7 may be naturally dropped in the following order: block 7A (large-sized) → block 7B (medium-sized) → block 7C (small-sized)). Also in this way, another block 7 can be inserted in a space between blocks 7, 7, thereby constructing structure 11 in which blocks 7 are densely gathered (medium-sized block 7B or small-sized block 7C is inserted into a space between large-sized blocks 7A, 7A and small-sized block 7C is inserted into a space between medium-sized blocks 7B, 7B, thereby constructing a structure in which blocks 7 are densely gathered).

Each of structures 10, 11 each using blocks 7A, 7B, 7C having different sizes is used as a structure for sea, river, or land (Figs. 19 and 20 show respective examples in which structures 10, 11 are used for sea). When each of structures 10, 11 is used for sea and river, each of structures 10, 11 is constructed along, for example, a breakwater or an embankment, and is used as a wave-dissipating block for attenuating energy of wave. When each of structures 10, 11 is used for land, each of structures 10, 11 is used for a sand arrestation dam or sand arrestation weir for preventing mudflow, landslide, or the like, for example. When blocks 7 are disposed to provide each of structures 10, 11 with a curved shape, each of structures 10, 11 can divert a natural force (such as a force of rough wave), and can direct the diverted force toward a natural object (such as a mountain).

It should be noted that Figs. 19 and 20 show respective examples in which structures 10, 11 are constructed using three types of blocks 7A, 7B, 7C having different sizes; however, the number of types of blocks 7 having different sizes for constructing each of structures 10, 11 is not limited to three as shown in the above example, and may be any plural number (for example, each of structures 10, 11 may be constructed using four types or five types of blocks having different sizes).

It should be noted that since each of structures 8, 10, 11 according to the third embodiment is used as a natural disaster prevention structure, a foundation block, a block for a surface of slope, or a sill, each one block 7 in each of structures 8, 10, 11 has to be large and heavy in weight.

Also in the third embodiment, as with the first embodiment, when it is difficult to transport blocks 5, solid matters 1 may be transported to a site for installation, and may be each sealed in the cement material using a movable plant prepared at the site so as to form blocks 7, and then the plurality of blocks 7 may be combined at the site to assemble each of structures 8, 10, 11 (Figs. 18, 19, and 20).

Although the embodiments of the present invention have been described above, the present invention is not limited to the above embodiments, and various modifications can be made without departing from the gist of the present invention.

Hereinafter, matters that can be modified in the first, second, and third embodiments in the same manners will be described.

For example, in each of the first, second, and third embodiments, the cement materials used in the solid matter forming step, the coating forming step, and the block forming step may be of different type or of the same type. For example, a cement paste may be used as the cement material to be mixed with waste 100 in the solid matter forming step, a cement paste or a mortar paste may be used as the cement material for coating solid matter 1 in the coating step, and a ready-mixed concrete may be used as the cement material for sealing solid matter 1 in the block forming step. Further, for example, any one of the cement paste, the mortar paste, and the ready-mixed concrete can be used in all of the solid matter forming step, the coating step, and the block forming step.

In each of the first, second, and third embodiments, the solid matter is preferably sealed in the cement material after coating the solid matter with the cement material; however, the solid matter may be sealed in the cement material without coating the solid matter with the cement material.

Further, in each of the first, second, and third embodiments, the single block or each of the blocks included in the structure may have the following feature. That is, each of the block and the block included in the structure may be formed in the following manner. For example, a solid matter may be wrapped in a waterproof sheet, and then the waterproof sheet may be coated with a cement material to form a film composed of the cement material. Thereafter, one or a plurality of such solid matters wrapped in the waterproof sheet(s) and coated with the cement material may be accommodated in a formwork, and a cement material may be poured into the formwork and hardened to form a block in which the solid matter(s) wrapped in the waterproof sheet(s) and coated with the cement material are sealed in the cement material. Thus, in each of the block and the block included in the structure, a waterproof sheet is disposed between a solid matter and the cement material so as to wrap the solid matter. The waterproof sheet is preferably, for example, a synthetic-rubber-based sheet or a synthetic-resin-based sheet. In this way, with the waterproof sheet, there is exhibited an effect of suppressing environmental pollution caused by a water content or the like entering into and exiting from the industrial waste serving as the solid matter.

### REFERENCE SIGNS LIST

1: solid matter
2, 5, 7: block
3, 6, 8, 10, 11: structure
4: columnar body
5a: longer width of block
5b: shorter width of block
5c: height of block
9: steel member
20: front side surface of block
21: rear side surface of block
22: left side surface of block
23: right side surface of block
24: upper end surface of block
25: lower end surface of block
26: protrusion of block
27: recess of block
50: projection portion of block
100: waste
101: cement material
110: shaping container
111: pressure application means
112: formwork
113: first protuberance of formwork
114: second protuberance of formwork
120: bath
S: space between blocks

## Claims

1. A method of manufacturing a block, the method comprising:
forming a solid matter in which a material including a waste is solidified in a predetermined shape;
covering a surface of the solid matter with a film composed of a cement material by attaching the cement material on the surface of the solid matter and hardening the cement material attached on the solid matter so as to coat the solid matter with the cement material; and
forming a block in which one or a plurality of the solid matters each coated with the cement material are sealed in a cement material, by accommodating, in a formwork, the one or plurality of the solid matters each coated with the cement material, pouring the cement material into the formwork, and hardening the cement material.

2. The method of manufacturing the block according to claim 1, wherein in the covering, the solid matter is coated with the cement material by immersing, for a predetermined time, the solid matter in the cement material stored in a bath, removing the solid matter from the bath, and hardening the cement material attached on the solid matter.

3. The method of manufacturing the block according to claim 1, wherein in the covering, the solid matter is coated with the cement material by hardening the cement material sprayed on the solid matter.

4. The method of manufacturing the block according to claim 1, wherein in the forming of the solid matter, by introducing the waste into a shaping container and compressing the waste by applying pressure using pressure application means, the solid matter is formed with the waste being compressed in the predetermined shape.

5. The method of manufacturing the block according to claim 1, wherein in the forming of the solid matter, by mixing the waste and the cement material in a shaping container and hardening the cement material, the solid matter is formed with a mixture including the waste and the cement material homogeneously being solidified in the predetermined shape.

6. The method of manufacturing the block according to claim 1, wherein
in the forming of the block, the block is provided with a plurality of sets of protrusions and recesses at an outer surface of the block by pouring the cement material into the formwork, the formwork having a plurality of sets of first protuberances and second protuberances, each of the recesses having a shape engageable with a corresponding protrusion, the recesses being located opposite to the respective protrusions, the first protuberances protruding outward, the second protuberances protruding inward, the second protuberances being located opposite to the respective first protuberances, and
the first protuberances and the second protuberances are provided to extend across respective entire heights of front, rear, left, and right side surfaces of the formwork to form the sets of protrusions and recesses only at front, rear, left, and right side surfaces of the block so as to extend across respective entire heights of the front, rear, left, and right side surfaces of the block.

7. The method of manufacturing the block according to claim 1, wherein
in the forming of the block, the block is provided with at least one protrusion and at least one recess at an outer surface of the block by pouring the cement material into the formwork, the formwork having a first protuberance and a second protuberance, the recess having a shape engageable with a corresponding protrusion, the first protuberance protruding outward, the second protuberance protruding inward, and
the first protuberance and the second protuberance are provided only at two side surfaces of the formwork facing each other in a frontward/rearward direction or a leftward/rightward direction to provide the protrusion and the recess only at an upper end surface and a lower end surface of the outer surface of the block.

8. The method of manufacturing the block according to claim 8, wherein the block is in a form of a rectangular parallelepiped in which a longer width of the block is an integer multiple of a shorter width of the block with the integer multiple being more than or equal to 2.

9. A block, wherein a surface of each of one or a plurality of solid matters in each of which a material including a waste is solidified in a predetermined shape is covered with a film composed of a cement material by coating the solid matter with the cement material, and the one or plurality of solid matters are sealed in a cement material.

10. The block according to claim 9, wherein in each of the one or plurality of solid matters, the waste is compressed in the predetermined shape.

11. The block according to claim 9, wherein each of the one or plurality of solid matters is formed using a mixture including the waste and the cement material homogeneously, and is solidified by hardening the cement material to integrate the waste with the cement material.

12. The block according to claim 9, wherein
a plurality of sets of protrusions and recesses are provided at an outer surface of the block, each of the recesses having a shape engageable with a corresponding protrusion, the recesses being located opposite to the respective protrusions, and
at least one set of a protrusion and a recess are provided only at front and rear side surfaces of the outer surface and at least one set of a protrusion and a recess are provided only at left and right side surfaces of the outer surface, and the sets of protrusions and recesses extend across respective entire heights of the front, rear, left, and right side surfaces of the block.

13. The block according to claim 9, wherein
at least one protrusion and at least one recess are provided at an outer surface of the block, the recess having a shape engageable with a corresponding protrusion, and
the protrusion and the recess are provided only at an upper end surface and a lower end surface of the outer surface of the block.

14. The block according to claim 13, wherein the block is in a form of a rectangular parallelepiped in which a longer width of the block is an integer multiple of a shorter width of the block with the integer multiple being more than or equal to 2.

15. A block structure comprising a plurality of blocks in combination, wherein in each of the blocks, a surface of each of one or a plurality of solid matters in each of which a material including a waste is solidified in a predetermined shape is covered with a film composed of a cement material by coating the solid matter with the cement material, and the one or plurality of solid matters are sealed in a cement material.

16. The block structure according to claim 15, wherein in each of the one or plurality of solid matters, the waste is compressed in the predetermined shape.

17. The block structure according to claim 15, wherein each of the one or plurality of solid matters is formed using a mixture including the waste and the cement material homogeneously, and is solidified by hardening the cement material to integrate the waste with the cement material.

18. The block structure according to claim 15, wherein
a plurality of sets of protrusions and recesses are provided at an outer surface of each of the blocks, each of the recesses having a shape engageable with a corresponding protrusion, the recesses being located opposite to the respective protrusions,
at least one set of a protrusion and a recess is provided only at front and rear side surfaces of the outer surface and at least one set of a protrusion and a recess is provided only at left and right side surfaces of the outer surface, and the sets of protrusions and recesses extend across respective entire heights of the front, rear, left, and right side surfaces of the block, and
the blocks included in the block structure are coupled by engagement between the protrusions and the recesses.

19. The block structure according to claim 18, wherein
in the block structure, a plurality of columnar bodies in each of which the blocks are disposed in a form of a plurality of stacks in an upward/downward direction are disposed side by side in a frontward/rearward direction and a leftward/rightward direction, and
each of the plurality of columnar bodies is constituted of a plurality of types of blocks with respective heights such that a position of a boundary between adjacent blocks in the upward/downward direction in each columnar body is displaced in the upward/downward direction with respect to a position of a boundary between adjacent blocks in the upward/downward direction in each of columnar bodies adjacent to the columnar body in the frontward/rearward direction and the leftward/rightward direction.

20. The block structure according to claim 15, wherein
at least one protrusion and at least one recess are provided at an outer surface of each of the blocks,
the protrusion and the recess are provided only at an upper end surface and a lower end surface of the outer surface of the block, and
the blocks included in the block structure are coupled by engagement between the protrusions and the recesses.

21. The block structure according to claim 20, wherein
an upper first block is disposed on and over a plurality of lower blocks disposed side by side and adjacent in a frontward/rearward direction or a leftward/rightward direction such that an entire longer width and/or an entire shorter width of the upper first block is supported by the plurality of lower blocks, and
the protrusions or recesses provided at upper end surfaces of the plurality of lower blocks are engaged with the recesses or protrusions provided at the lower end surface of the upper first block to couple the plurality of lower blocks and the upper first block.

22. The block structure according to claim 21, wherein
each of the blocks has a longer width that is an integer multiple of a shorter width of the block with the integer multiple being more than or equal to 2,
an upper third block is laid on a projection portion of a lower second block projecting outward with respect to the upper first block such that the first block and the third block are adjacent in the frontward/rearward direction or the leftward/rightward direction and an entire longer width or an entire shorter width of the third block is supported by the second block, and
as with the upper first block, the upper third block is coupled to the lower second block by engagement between the protrusions or recesses provided at the upper end surface of the projection portion of the lower second block and the recesses or protrusions provided at the lower end surface of the upper third block.

23. The block structure according to claim 22, wherein
the longer width of each of the blocks is twice as large as the shorter width of the block, and
the projection portion of the second block has a range that is 1/2 of the longer width of the second block.

24. The block structure according to claim 15, wherein as the blocks in combination, a plurality of types of blocks having different sizes and provided with no protrusions and recesses on outer surfaces of the plurality of types of blocks are used, and the plurality of types of blocks are stacked randomly.

25. The block structure according to claim 24, wherein each of the blocks in combination is in a form of a hexahedron.

26. A method of constructing a block structure including a plurality of blocks in combination, wherein
in each of the blocks, a surface of each of one or a plurality of solid matters in each of which a material including a waste is solidified in a predetermined shape is covered with a film composed of a cement material by coating the solid matter with the cement material, and the one or plurality of solid matters are sealed in a cement material, and
by naturally dropping a plurality of types of blocks having different sizes onto an installation surface, the plurality of types of blocks are stacked randomly.

27. The method of constructing the block structure according to claim 26, wherein in each of the one or plurality of solid matters, the waste is compressed in the predetermined shape.

28. The method of constructing the block structure according to claim 26, wherein each of the one or plurality of solid matters is formed using a mixture including the waste and the cement material homogeneously, and is solidified by hardening the cement material to integrate the waste with the cement material.

29. The method of constructing the block structure according to claim 26, wherein each of the blocks in combination is in a form of a hexahedron.
